(19) Europäisches Patentamt / European Patent Office / Office européen des brevets

(11) **EP 4 493 109 B1**

(12) **EUROPEAN PATENT SPECIFICATION**

(45) Date of publication and mention
of the grant of the patent:
**20.05.2026 Bulletin 2026/21**

(21) Application number: **22723173.5**

(22) Date of filing: **18.03.2022**

(51) International Patent Classification (IPC):
*A61C 7/06* *(2006.01)* *A61C 7/00* *(2006.01)*
*A61C 9/00* *(2006.01)*

(52) Cooperative Patent Classification (CPC):
**A61C 7/06; A61C 7/002; A61C 9/0046;
A61C 9/0053**

(86) International application number:
**PCT/GR2022/000012**

(87) International publication number:
**WO 2023/175359 (21.09.2023 Gazette 2023/38)**

(54) **EXTRAORAL ORTHOPAEDIC DEVICE FOR THE PROTRACTION OF THE JAWS**

EXTRAORALE ORTHOPÄDISCHE VORRICHTUNG ZUR PROTRAKTION DER KIEFER

DISPOSITIF ORTHOPÉDIQUE EXTRAORAL DESTINÉ À LA PROTRACTION DES MÂCHOIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.01.2025 Bulletin 2025/04**

(73) Proprietors:
• **Koutzoglou, Stylianos
74132 Rethymno (GR)**
• **Koutzoglou, Eleni
74132 Rethymno (GR)**
• **Koutzoglou, Despoina
74132 Rethymno (GR)**

(72) Inventors:
• **Koutzoglou, Stylianos
74132 Rethymno (GR)**
• **Koutzoglou, Eleni
74132 Rethymno (GR)**
• **Koutzoglou, Despoina
74132 Rethymno (GR)**

(74) Representative: **Panagiotidou, Effimia
3 Aristotelous Str.
546 24 Thessaloniki (GR)**

(56) References cited:
| WO-A1-2020/254642 | WO-A1-2020/254642 |
| WO-A1-2021/090035 | WO-A1-2021/090035 |
| US-A- 5 890 891 | US-A- 5 890 891 |
| US-A1- 2018 028 282 | US-A1- 2018 028 282 |
| US-B1- 6 213 765 | US-B1- 6 213 765 |

**Description**

The above-mentioned invention is an extraoral device for the direct protraction of the maxilla, by forward, downward or upward adjustments, as each case requires, as well as for the indirect protraction of the mandible, where it is necessary.

Through this extraoral device direct traction is applied to the maxilla, immediately after its "rapid expansion" [1-4], using the alternate way [5-7], with elastic bands which are attached to the extraoral device and some classic mechanism of "rapid palatal expansion", as in: [1-4] or through skeletal support, as in: [8]. The mandible can also be protracted indirectly in patients with a skeletal Class II malposition of the jaws, when the extraoral device is combined with intraoral mechanisms ("rapid palatal expansion" and other mechanism in order to move the mandible forward, as in: functional appliances, removable or fixed mechanisms in the mandible in combination with Class II elastics or other mechanisms aiming to move the mandible forward etc.).

**A.** So far, the extraoral devices for the protraction of the maxilla commonly used, are the "masks" designed by Delaire [9, 10] and Pettit [11] which are related only to the skeletal Class III anomaly. In both of these devices, the forehead and chin are used as support in order to apply elastic forces, which currently amount to approximately 400 gr per side. In this way, the protraction of the maxilla is achieved (action), while the simultaneous pressure (reaction) on the temporomandibular joint tissues (particularly on the condyle, articular disc and fossa) could lead to a TMJ derangement, as anterior displacement of the articular disc (development of TMJ sounds, pain, reduced mouth opening, etc.). Extraoral orthopedic devices of the same use (support on the frontal bone and the chin) are also the Turley [12] "mask" and the Face Mask/Reverse -pull Headgear Tübinger Model [13]. The "Sky Hook" headgear [14] is also used for the protraction of the maxilla after its "rapid expansion", which is supported on the cranial bones, parietal and occipital, as well as on the chin. The elastic forces applied to the maxilla originate mostly from its chin support.

**B.** The Grummons face mask [15] uses the forehead as support and, instead of the chin, the infraorbital zygomatic area. This type of support differentiates this device from all of the above-mentioned. The face mask produced by the Leone company [16] is of the same philosophy. While these devices are used with the aim to protract the maxilla after its rapid expansion, the therapy results are highly controversial, because of the use of the infraorbital zygomatic support areas. These areas of the face comprise the zygomaticomaxillary sutures, which are subjected to a reactive pressure, which generates the maxillary pulling action.

**C.** From time to time, devices have appeared for the maxillary protraction, which use as skeletal anchorage only the frontal bone of the skull. The "maxillary modified protraction headgear" [17] is one of them. The only advantage of this device is its support. The non-use of the mandible, as support for the protraction of the maxilla, eliminates the possible side-effect of TMJ derangement, common to devices of type A. The industrial production, as well as the practical use of this device, are enormously impeded by the personalized bending of the extraoral and intraoral wires separately in each patient, aiming, firstly at an easy insertion of the intraoral wires to the tubes of a concrete intraoral appliance and secondly at avoiding the well-known side-effects during maxillary protraction.

**D.** Nowadays, intraoral orthopedic devices of skeletal support are widely used in the treatment of Angle Class III malocclusion. Mini-plates [18] or titanium mini-plates [8] are surgically placed in the zygomatic bone, between the canine and lateral incisor [18] or underneath the lower incisors' apices [8]. The skeletal anchorage in the maxilla could be two palatal mini-screws [8], which are incorporated in an appliance used for "rapid palatal expansion" and protraction of the maxilla, or could be titanium mini-plates placed on the infra-zygomatic crest above the buccal roots of the first permanent molar [18]. Growth repression of the mandible occurs because of the simultaneous backward compression of the chin from these devices. The glenoid fossa is transformed with corresponding displacement of the condyle [19]. These anatomic changes are not required in all Angle Class III malocclusion cases, such as in patients who present a physiologic growth in their mandible in conjunction with maxillary retrognathism due to the size or position of the maxilla. This is commonly the case in cleft lip and palate patients. In the cases where these anatomic changes could be a positive outcome, their medical usefulness is lost because of the compression of the TMJ tissues, which could lead to a TMJ dysfunction. Extraoral orthopedic devices supported on the frontal bone and the chin, in combination with titanium infra-zygomatic mini-plates, have been used for the maxillary protraction [20].

In all these three types of devices in the category D, the mandible is pushed backwards, while the maxilla is protracted. In addition to the risk of creating a TMJ derangement, as already mentioned above (category A devices), there are a lot of cases in which the mandible is positioned properly in the face. Nevertheless, all these types of devices operate in a compensatory manner, pushing the mandible backwards, modifying its growth and influencing its function and the aesthetic of the face adversely.

Functionally, besides the side-effects that can develop from the compression of the TMJs, it should be pointed out that the backward push of the mandible, followed by the tongue, could contribute to future problems of sleep apnea. Don't forget, that all orthodontic appliances, which are used in the therapy of sleep apnea, are designed to bring the mandible forward, with the tongue following this displacement of the mandible with simultaneous relief of the airway in the oropharynx level.

**E.** In our opinion, the "orthodontic appliance" [21] [U.S. PATENT: 5,158,451], the "Mandibular advancement" [22] [U.S. PATENT 2012/0040301 A1], the "orthopedic device for the protraction of the maxillary arc" [23] [WO2017089971 (A1)], the "maxillary protraction device" [24] [US2018028282 (A1)], the "Orthodontic protraction appliance with head-chest bracing" [25] [US6213765 B1], the "Reverse pull, extraoral dental assembly with head and body" [26] [USOO5890891 A], the "Cranial restructuring devices" [27] [WO 2020/254642 A1, PCT/EP 2020/067216], and the "extraoral orthopedic device for the direct protraction of the maxilla and the indirect protraction of the mandible" [28] [WO2021090035A1] are correctly designed, because their use avoids TMJ compression, do not push the mandible backwards using it as support and increases the volume of the oral cavity. WO2021090035A1 relates to an extraoral orthopaedic device for the direct protraction of the maxilla and the indirect protraction of the mandible, comprising a skeletal support wreath placeable on the periphery of the neurocranium, a horizontal girder, which is coupled through elastic bands with an intraoral mechanism and perpendicular girders, which couple the above-mentioned skeletal support wreath with the said horizontal girder and the skeletal support wreath comprises a tightening mechanism in its frontal area, and a first means of adjustment and support in its lateral area in order to ensure the proper placement and safe immobilization of the two perpendicular girders individualized to each patient and the perpendicular girders comprise a second means of adjustment and support in order to ensure the placement of the said horizontal girder, aiming to optimize the direction and tension of the elastic bands individualized to each patient.

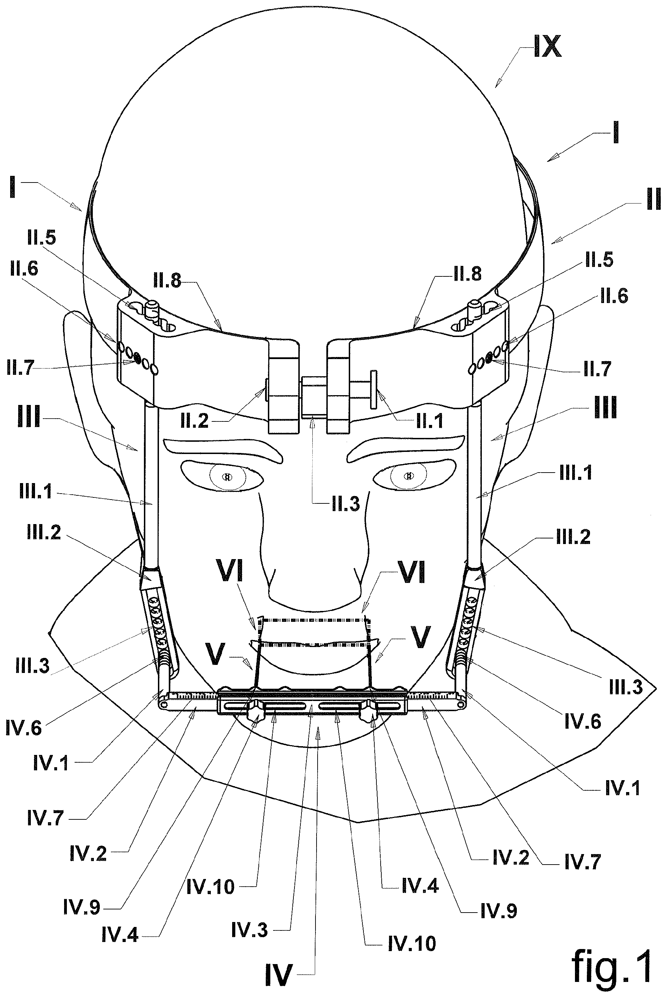

However, the device described herein, as shown in Figures 1-7, provides excellent stability, greater efficiency, ergonomics and flexibility in its application and use, due to:

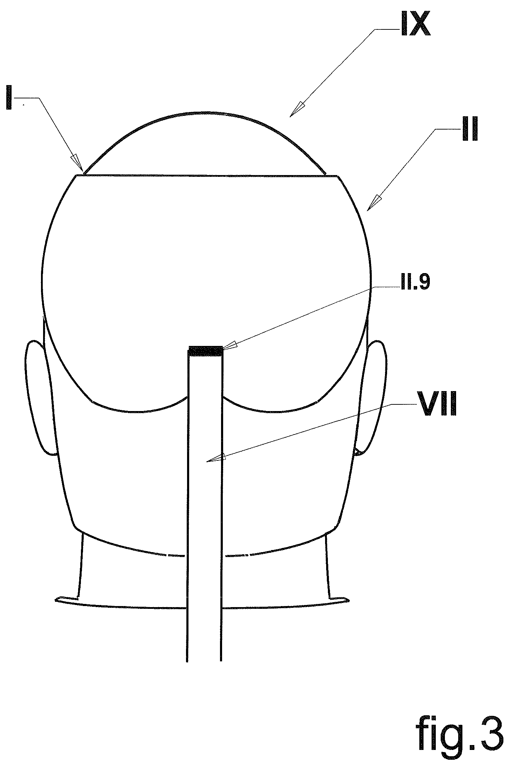

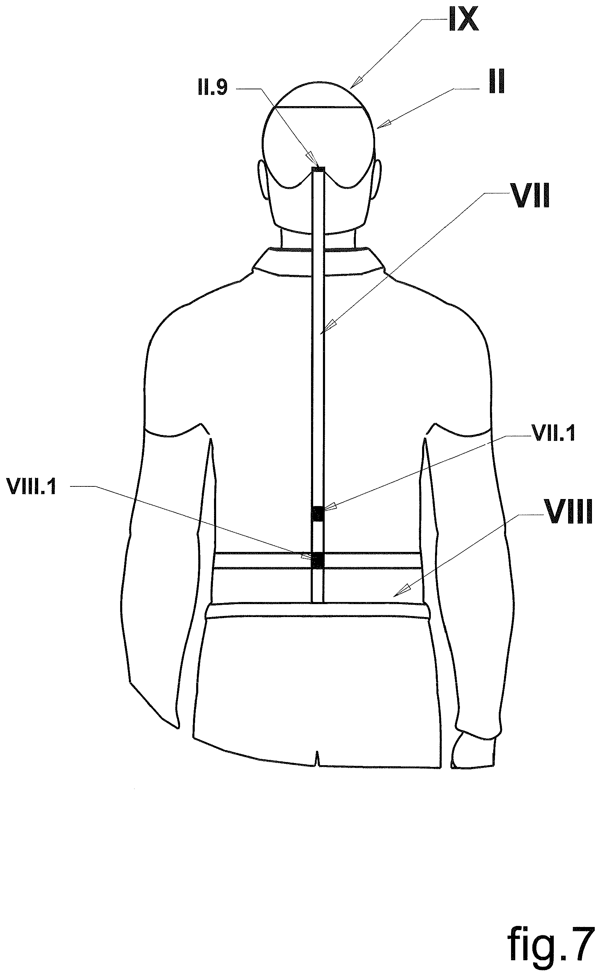

1. The fully anatomical design of the ellipsoidal skeletal support wreath on the neurocranium, the stabilization of the wreath on the neurocranium through an elastic fixation strap and a belt around the waist or trunk of the user (fig.3,7), its fast and more precise adaptation to the head of each user, as well as due to its exceptional flexibility during use to ensure the maxilla elastic tractions apply optimal tension and direction

2. The construction material of the vertical girders and the horizontal girder is an aluminum alloy, which is very light as a material and resistant to corrosion, especially through its anodizing. It is also emphasized that, due to their fixed design, the three metal girders of the device described herein are removable/replaceable and can be reused, after sterilization, with any other user, in the context of circular economy, something that to date has not been incorporated in any of the existing extraoral orthopedic devices for a similar purpose.

3. Based on the telescopic design of the horizontal girder in our device, the width of its middle part varies on a case-by-case basis, adapting perfectly to the width of the face of any user, since it always enters vertically into the slots of the perpendicular girders. In contrast, the design of the horizontal girder on the orthopedic device, [28], is incorrect because, due to the angulation of its two lateral sections, during its adjustment, when it is placed closer to the oral slit, the perpendicular girders are pressed towards the midsagittal plane, while the perpendicular girders are pushed outwards, when it is adjusted outwards from the mouth slit, due to the above-mentioned angulation.

4. Regarding the design of the perpendicular girders, the possibility of creating an angle in their lower part in the frontal plane in order to follow the morphology of the human face, brings them more harmoniously closer to the morphology of the human face, which generally gives the device described herein a friendlier appearance and significantly reduces its volume, since the length of the middle part of the horizontal girder is directly affected (fig.1).

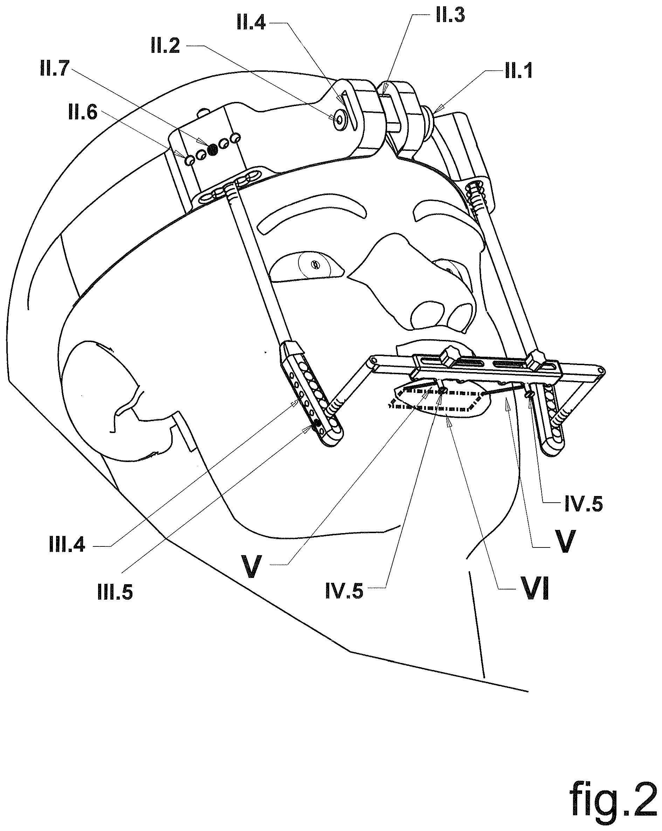

5. Another advantage of the device described herein is the guided-adjustable tightening mechanism (fig.1,2) in the frontal area of the skeletal support wreath. This provides ease of application, stability and above all comfort, since entering its left part into the socket created by its right part attracted by the tightening screw located in its left part, the up and down oscillations of the two parts of the wreath are avoided, so as to behave as a single unit (fig.1,2). It is also not required to be fully tightened, because the skeletal support of the wreath is complemented by the elastic fixation strap (fig.3,7). This prevents discomfort in the forehead and generally in the user's head, which is vital for the user's cooperation.

6. The direct protraction of the maxilla, mainly in patients who present opisthognathic maxilla in the face (maxillary retrognathia), despite their Angle Class I or Class II dental relationship, is not referred to in the above-mentioned inventions of category E, except in [28]. In these malocclusions, the protracted maxilla can be held in its new position by our device and after that, the mandible can be moved forward by using another intraoral mechanism. This is the only way the aetiologic therapy of the maxillary retrognathia in Angle Class I and II malocclusions can be achieved.

7. A very significant disadvantage also of the "extraoral orthopedic device for direct protraction of the maxilla and indirect of the mandible" [28] and of all the above-mentioned devices of category E, except in [24], is the risk of dislodgment of the skeletal support wreath, due to the upward and forward torque created during their use. Through the design of the herein described device this risk is minimized, because it is based on two key features: a. The methods used in the manufacture of the ellipsoidal skeletal support wreath, described below, ensure an excellent anatomical fit on the user's head, something that is not provided in any of the above-mentioned devices in all categories, and which is necessary for its stable hold on the neurocranium, but also for the comfort of the user when they wear something that is individualized made to their measurements. **b.** Due to the elastic fixation strap that is attached to the skeletal support wreath, the risk of its dislodgment caused by the clockwise (negative) produced moment is minimal, regardless of the forces' magnitude, aiming at the protraction of the maxilla.

No matter how well the ellipsoidal skeletal wreath fits, there are heads of users with such anatomy (small area on the dorsal surface of the parietal bones and occipital bone) and / or users with oily and fine hair, that no matter how fast the tightening mechanism is in the frontal bone area, there is always the risk of dislodgment. This is due to the clockwise (negative) produced moment on the dorsal portion of the ellipsoidal wreath in response to the application of the force of elastic tractions to protract the maxilla. An opposite force must be exerted on the dorsal part of the ellipsoidal skeletal support wreath, producing an anticlockwise (positive) moment, which is achieved through the suspension of an elastic fixation strap (VII, fig.3,7) in this part, which runs down the dorsal surface of the user's trunk and is stabilized safely in a belt (VIII, fig.7) worn around the user's waist or on any part of their trunk under the armpits. This way, the ellipsoidal skeletal wreath can be worn on any human skull and be used safely in the exercise of any force of direct traction of the maxilla and indirectly of the mandible, without the slightest risk of dislodgment.

The tightening mechanism (II.1-4, fig.2) in the frontal bone no longer acquires the primary significance of support, which is of vital importance, because its excessive tightening, in order to avoid the dislodgment of the wreath, creates such pain in users, that in turn it drastically reduces the user's motivation to cooperate.

8. Due to the methods of design and manufacture of the herein-described ellipsoidal skeletal support wreath, described below, which lead to an excellent anatomical fit and a precision placement of all its individual parts, it is manufactured finally with very high accuracy, which is not the case with the device [28].

9. Finally, as mentioned in the design of the device, [28], the part of the skeletal support wreath directly distal from the cylindrical slots, which accommodate the perpendicular cylindrical girders, "becomes extremely thin", which, in our opinion, could lead to a failure of the skeletal support wreath in these areas, because these parts of the wreath receive an exceptional load during the operation of the device, proportional to the traction forces on the maxilla.

Today, in patients with Angle Class II malocclusion, many of whom are in a growth phase and their growth potential can be modified, the orthodontist uses such techniques to move the maxillary permanent molars distally, aiming at an Angle Class I molar relationship (only dental and not skeletal, aetiological approach), ignoring many times the mandibular retrognathia. In the best cases, the orthodontist uses functional appliances, removable, fixed or hybrid types, to move the mandible forward. Even in these cases, the devices used are supported in the maxilla to reposition the mandible forward, which results in suppressing the forward maxillary growth (when there is action, there is reaction).

In Angle Class II malocclusion cases, in which the maxilla is located in a harmonic or in a retrognathic position within the face, which is apparent by the increased nasolabial angle in the profile of the patient, the same therapy techniques are used, aiming at an Angle Class I dental relationship, ignoring the skeletal data of the jaws, as parts of the face in its entirety. In order to create harmonic and juvenile relationships of the two jaw bones within the face, orthofacial surgical interventions are used in adults, moving mainly the maxilla and the mandible forward and secondarily creating an Angle Class I molar relationship [29].

The aim of the herein described invention is the creation of a convenient extraoral orthopedic mechanism, stable and precise in its adjustment and function, which in combination with an intraoral device is able to protract the maxilla directly, easily and without side-effects, as well as the mandible, indirectly, mainly in cases of skeletal Class III and Class II malocclusions respectively. This mechanism can be used in cooperative, growing young people.

Nowadays, in an Angle Class II malocclusion patient, it is impossible for an orthodontist to firstly reposition the maxilla further forward and deteriorate temporarily the dental Class II relationship, then reposition the mandible much further forward, holding simultaneously the maxilla in its protracted position even with our suggested extraoral orthopedic device. Indeed, there is a plethora of Angle Class II malocclusion growing young people, with both jaw bones in a retrognathic position who can modify their facial growth. Nevertheless, the orthodontist "going with the flow" holds the maxilla in its original retrognathic location within the face and, with its support, tries to relocate the mandible forward.

The proper head and body posture, unimpeded nasal breathing, mastication of not only soft food and physiologic swallow pattern should be very seriously considered, in the context of a holistic orthodontic treatment.

In cases, where the original location of the maxilla within the face is in a prognathic position (severe labial inclination of the upper permanent incisors, very reduced nasolabial angle) or in the true skeletal Class III cases, in which the mandible is prognathic because of its size with respect to the cranial base [30], we accept the use of the widely-used devices and techniques of today, for example in the true skeletal Class III cases, the compensatory support in the mandible and compression of the temporomandibular joints, in an effort to prevent the patient from orthognathic surgery in the future, but with possible negative implications.

Our extraoral orthopedic device can be especially used in cooperative growing young people, for whom the modification of the growth of their stomatognathic system is possible, for: **a.** The therapy of skeletal Class III malocclusion, protracting the maxilla directly after its "rapid expansion" [1-4, 8] using the alternate way [5-7] without the simultaneous compression and impeding of mandible growth, thus avoiding: probable dysfunction of the TMJs, reduction of tongue vital space, which could lead, in turn, to possible sleep apnea etc. We especially mention the treatment of patients suffering from cleft lip and palate, in which the maxilla is posterior due to the connective tissue scars on the upper lip and upper jaw created by the orthognathic/plastic surgery in the upper lip and maxilla. However, following the usual practice, the orthodontist uses a common physiologic mandible in size and position as support to protract a retrognathic maxilla [31]. Always in these cases, due to action-reaction, the mandible is moved backwards resulting in what has been explained above. **b.** The therapy of skeletal Class II malocclusion, with Angle Class I or II dental relationship, in the cases where the maxilla is retrognathic in its original position within the face. After the activation of viscerocranium sutures using the "rapid palatal expansion" technique [1-4, 8] with the alternate way [5-7], the maxilla is protracted, initially, and held in its relocated position, subsequently, by the extraoral device. Finally, the mandible is protracted using an additional intraoral mechanism. In this way, the growth modification of both maxilla and mandible gives an unmatched aesthetic result to the appearance of the whole face and greatly helps the function of breathing and tongue, after the space in the mouth cavity has significantly increased. So, the probable cause of sleep apnea is notably reduced.

## DESCRIPTION OF DRAWINGS

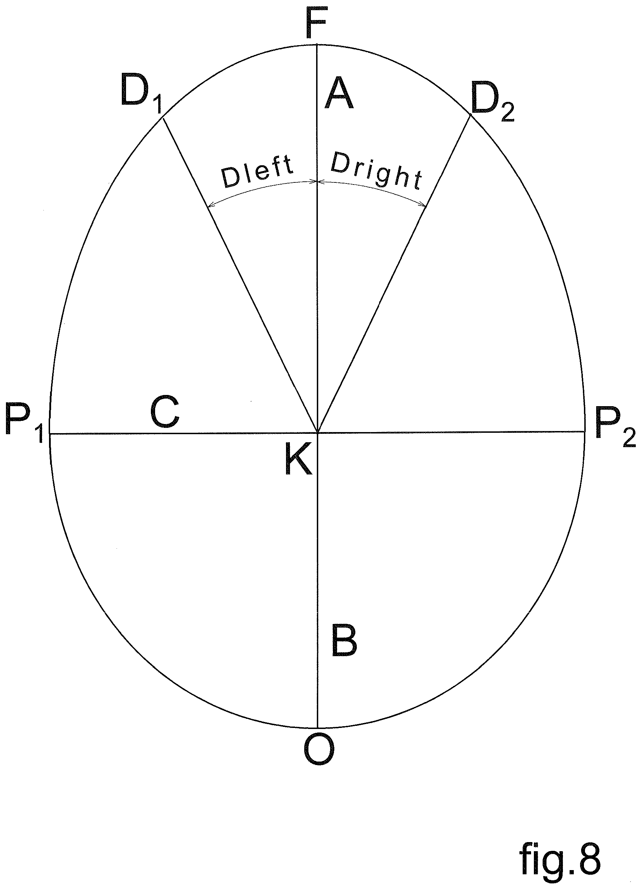

The extraoral orthopedic device (I), as illustrated in detail in Figures 1-7, is composed of roughly 5 parts: the ellipsoidal skeletal support wreath (II) on the neurocranium (IX), the perpendicular girders (III), the horizontal girder (IV), the elastic bands (V), through which the device is coupled with the intraoral mechanism of "rapid palatal expansion" (VI) and the elastic fixation strap (VII) with the belt (VIII), which pull and immobilize the ellipsoidal skeletal support wreath downwards, in order to avoid its dislodgment when the device (I) is in use. The figures 8-16 are related to the methods of design and manufacture of the ellipsoidal skeletal support wreath (II).

In **figure 1** schematically illustrated are: the front view of the device (I) in use, the ellipsoidal skeletal support wreath (II) attached to the neurocranium (IX), the perpendicular girders vertical to the ellipsoidal skeletal support wreath consisting of 2 parts: the cranial-part, which is cylindrical, longer and thinner (III.1) in comparison to the tail-part (III.2), which is a cuboid with rounded tips and base. The tail-part can be either straight, next to the cranial (0 degrees to each other), or at an angle to the cranial-part towards the midline of the face, as shown in figure 1.

The horizontal girder (IV), of a U-shape with right angles and of telescopic type, consists of 3 parts (IV.1, IV.2 and IV.3). It is coupled with the ellipsoidal skeletal support wreath (II) through the perpendicular girders (III). In the ellipsoidal skeletal support wreath (II) recognizable are: the tightening mechanism on the forehead, which is of a guided-adjustable type and consists of the screw (II.1), the rivet (II.2), the guide (II.3) and the driver intake cavity (II.4, fig.2), the cylindrical slots (II.5) for the placement of the perpendicular girders (III), as well as the threads (II.6), where the fixing screws (II.7), responsible for the immobilization of the perpendicular girders, are placed. The internal soft inlay (II.8) is also illustrated in the frontal part of the skeletal support wreath (II).

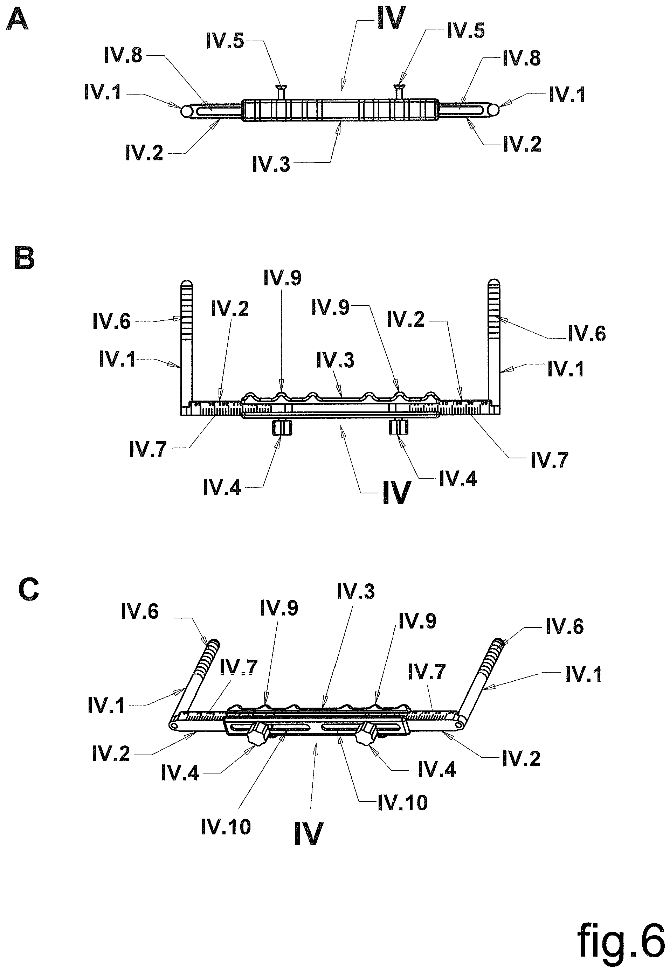

In the tail-part of the perpendicular girders (III.2), the cylindrical slots are recognizable (III.3), in which the IV.1 extreme parts of the horizontal girder (IV) are accommodated. In the central part (IV.3) of the horizontal girder, in the shape of a concave cuboid, the support bulge areas are illustrated, which accommodate the internal threads (IV.9) of the mounting screws (IV.5, fig.2 and 6), responsible for the attachment of the elastic bands (V) and the cavities (IV.10), which serve the telescopic function of the horizontal girder when its cuboidal parts (IV.2) slide into its central part (IV.3), depending on the width of the user's face. In the parts (IV.2) of the horizontal girder (IV), the fixing screws (IV.4) for the immobilization of these parts into the central part (IV.3) are illustrated, after taking their final position. Through the markings (IV.7) also shown on them, it can be determined whether the width of the left half of the face is equal to the width of the right half. Finally, the intraoral mechanism of "rapid palatal expansion" (VI) is schematically illustrated. It is coupled through the elastic bands (V) with the horizontal girder (IV), after their attachment on the mounting screws (IV.5, fig.2) extraorally.

In **figure 2** schematically illustrated are: the tightening mechanism of the ellipsoidal skeletal support wreath on the forehead, which is of guided-adjustable type and consists of the screw (II.1), the rivet (II.2), the guide (II.3) and the guide intake cavity (II.4), the attached elastic bands (V) to the mounting screws (IV.5), which are fixed to the threads (IV.9) of the central part of the horizontal girder (IV.3), the threads (II.6), where the fixing screws (II.7) for the immobilization of the perpendicular girders (III) are placed into the skeletal support wreath (II) and the threads (III.4), where the fixing screws (III.5) for the immobilization of the horizontal girder are placed into the tail-part (III.2) of the perpendicular girders (III).

In **figure 3,** the rear view of the orthopedic device (I), the dorsal aspect of the ellipsoidal skeletal support wreath (II) on the neurocranium (IX) and the attached elastic fixation strap (VII) in its position (II.9) are illustrated.

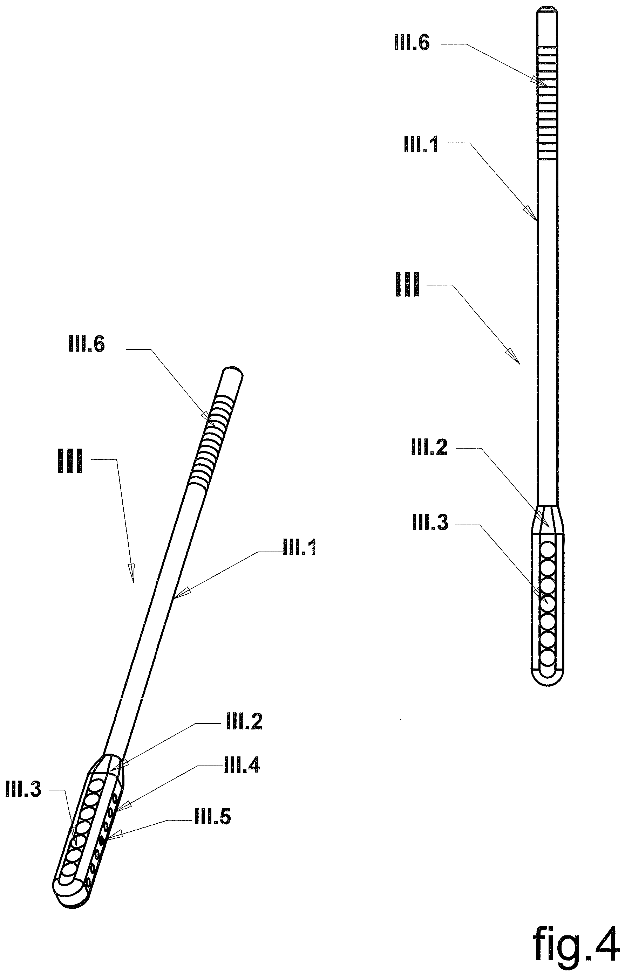

In **figure 4,** the aluminum, removeable and reusable, after sterilization, perpendicular girders (III) are illustrated, which are main segments of our device (I) and consist of 2 parts: a. the cranial-part (III.1), which is cylindrical, longer and thinner than the tail-part (III.2) and on its cranial portion has markings (III.6), responsible for the symmetrical adjustment in height, of the right and left perpendicular girder in the skeletal support wreath (II) and b. the tail-part (III.2), which has the shape of a cuboid with rounded tips and a rounded base. The upper end of the tail-part (III.2) allows the smooth insertion of the cylindrical cranial-part of the perpendicular girder into it at an angle of 0 degrees, as shown here, or larger (5 - 20 degrees) as shown in figures 1,2 and 5.

Cylindrical slots are accommodated along almost the entire height of the perpendicular girders' tail-part (III.2), responsible for the symmetrical insertion of the extreme parts (IV.1) of the horizontal girder (IV). In the respective areas of the cylindrical slots of the tail-part (III.2) there are threads (III.4) perpendicular to them in order to attach fixing screws (III.5) for the stabilization of the extreme parts (IV.1) of the horizontal girder after they have received their final position into the perpendicular girders.

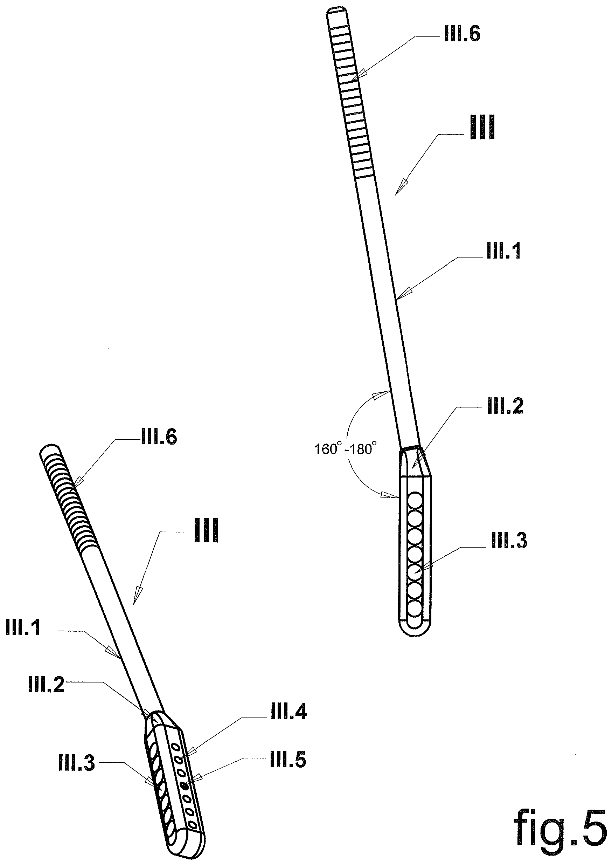

In **figure 5,** the removable and reusable, after sterilization, perpendicular girders (III), are once more illustrated with the detail that their tail-parts (III.2) create an angle of 5 - 20 degrees with the cranial-part (III.1).

In **figure 6,** the aluminum, removable and reusable, after sterilization, horizontal girder (IV), U-shaped with right angles and of telescopic type, which consists of 3 parts (IV.1, IV.2 and IV.3) is illustrated. In view A of this figure, the inner surface of the U-shaped horizontal girder at a right angle, is shown, where the mounting screws of the elastic bands (IV.5), the concave area (IV.8) of the non-solid parts (IV.2) of the horizontal girder, which aims to reduce its weight and its extreme cylindrical parts (IV.1), are illustrated. In view B, the top view of the horizontal girder (IV) is shown. Its two extreme parts (IV.1), which have markings (IV.6) on their free end, are joined articulated at a right angle with the outer ends of its other parts (IV.2), which are straight and have the shape and form of a cuboid, in order to ensure their symmetrical insertion into the tail-part of the perpendicular girders (III.2). Their telescopic movement to the right and left in its central part (IV.3) can be controlled through the markings (IV.7), they have along almost their entire length.

Asymmetry in the width of the two halves of the face can be ascertained and measured through these markings (IV.7). In the frontal surface of the horizontal girder's, IV.2 parts, threads parallel to the level of the markings, which accommodate the fixing screws (IV.4), that are responsible for the immobilization of these two parts (IV.2) during the telescopic operation of the horizontal girder (IV), when they have taken their final position by sliding into the central part (IV.3) of the horizontal girder (IV), are illustrated. Finally, the central part (IV.3) of the horizontal girder (IV), on which are positioned supporting bulgy areas, which accommodate the internal threads (IV.9) for the mounting screws (IV.5, fig.2 and 6), responsible for the attachment of the elastic bands (V), which couple the intraoral mechanism of "rapid palatal expansion" (VI) with the horizontal girder (IV) are illustrated.

These internal threads (IV.9) may have their opening for inserting of the mounting screws (IV.5) for the attachment of the elastic bands (V), either on their cranial surface of the central part (IV.3) or on the caudal surface (as in Figures 1,2 and 6) accommodating them (IV.5) accordingly. However, whichever side the internal threads (IV.9) are manufactured to accommodate the mounting screws (IV.5) for the attachment of the elastic bands (V), these screws may be positioned with their head downwards or with their head 180 degrees inverted, if the entire horizontal girder (IV) is itself inverted by 180 degrees. This can also be achieved, if we remove from its central part (IV.3) the L-shaped joined parts IV.I and IV.2 as a whole, taking out first the fixing screws (IV.4) from their IV.2 parts, repositioning them at a 180-degree angle, repositioning their fixing screws (IV.4) on them, and finally, inverting the entire horizontal girder (IV) by 180 degrees. Lastly, in view C (from above and in front), apart from the other above-mentioned elements, the cavities (IV.10), which allow the telescopic function of the horizontal girder, when its cuboid-shaped parts (IV.2) slide into its central part (IV.3), depending on the width of the face of each user, are illustrated.

These properties of the horizontal girder (IV), due to its telescopic function and its overall design, adjustable in width (transverse plane) to any human face, as well as in length (sagittal plane) by entering or leaving the perpendicular girders (III), without affecting them, as much as necessary, in order to achieve an excellent amount of traction force and traction direction, makes it perfectly adaptable, extremely flexible in its application and of universal acceptance, applicable to all cases.

Also, the property of the mounting screws for the attachment of the elastic bands, to be found sometimes below and sometimes above, in combination with the several slots of the tail-part (III.2) of the removeable perpendicular girders (III), which accommodate the horizontal girder (IV) through its extreme part (IV.1), but also the possibility of sliding the perpendicular girders in height inside the cylindrical slots (II.5) of the skeletal support wreath gives the flexibility of placing these metal girders on any skull in relation to the vertical plane. The many cylindrical slots (II.5) for the accommodation of the perpendicular girders (III) in the skeletal support wreath (sagittal plane) offer, in combination with the other aforementioned properties of the perpendicular girders and the horizontal girder (aluminum material and removable), unmatched precision and individualized application of the device on any skull, as well as the possibility of reusing all metal girders after sterilization.

In **figure 7,** the elastic fixation strap (VII) attached in the position II.9 of the dorsal area of the ellipsoidal skeletal support wreath (II) and the belt (VIII) around the waist of the user, is illustrated. After it has been hung around the belt VIII, passing it through a loop that it has in its free lower end, its tensioner VII.1 is activated. After the strap has been stretched and has reached its optimal length according to the height of each user, it is finally immobilized in position, VIII.1, of the belt (VIII). The main purpose of the belt (VII) is to prevent the skeletal support wreath (II) from being dislodged during operation of the device (I).

In **figure 8,** the maximum perimeter of the head of each user in the form of two joined ellipses with their common minor axis PIP2 = 2C is schematically illustrated. F is defined as the peak of curvature in the anterior (frontal) region of the head and O is defined as the peak of curvature in the posterior region. P1 is defined as the peak of the curvature of the right parietal eminence, located approximately in the middle of the parietal bone. This anatomical position defines the widest point of the perimeter of the human skull. P2 is defined as the peak of the curvature of the left parietal eminence. A is defined as the major semi-axis of the front ellipse and B is usually the major semi-axis of the rear ellipse. K is the center of the two joined ellipses. The D1D2 arc clinically corresponds to the arc between the lateral canthi of each user and the Dleft and Dright angles formed respectively.

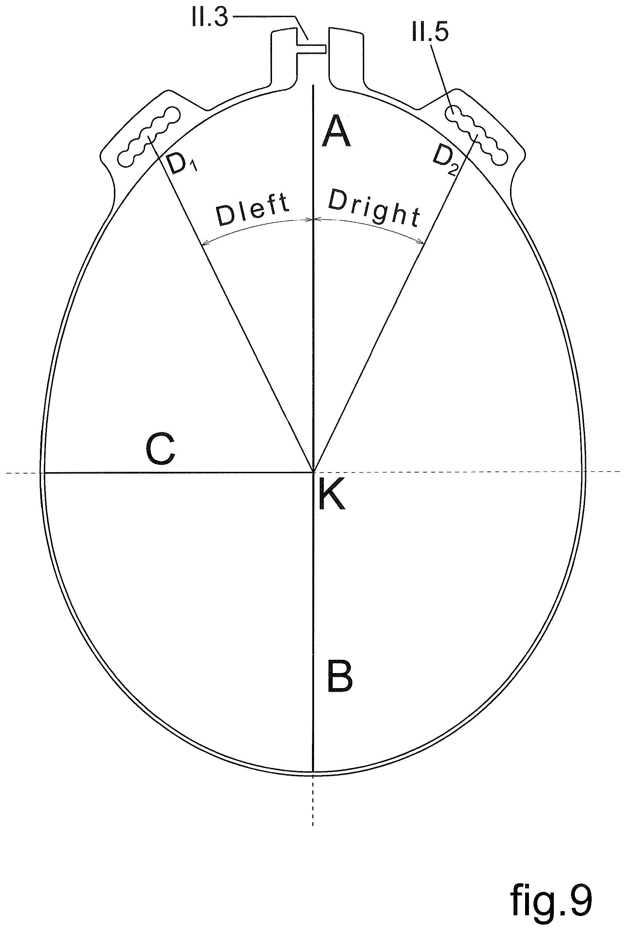

In **figure 9,** the digitally designed ellipsoidal skeletal support wreath (II, fig.1), with its open tightening mechanism (II.1-4, fig.2) in its frontal area, and the cylindrical slots (II.5, fig.1,2) of the perpendicular girders (III, fig.1,2) and the relations of all these elements with the semi-axes (A, B, C) of the two joined ellipses in their common axis 2C, are illustrated. The lines defined by the points K, D1 and K, D2 cross the centers of the 3rd in a row of cylindrical slots (II.5, fig.1,2).

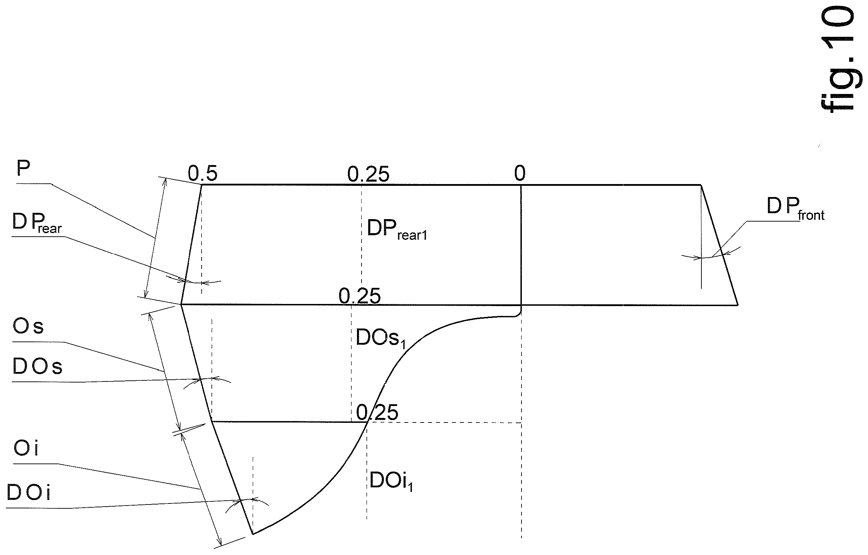

In **figure 10,** the right side of the ellipsoidal skeletal support wreath (II, fig.1) with its inclinations in its various parts, is illustrated. In the anterior region its inclination is calculated by the DPfront angle corresponding to the curvature of the frontal bone in the area of the midsagittal plane. The DPrear, Dos and Doi angles correspond to the curvatures of the three sections of its dorsal surface in the areas of the parietal bones and the occipital bone in the midsagittal plane area. The lengths of these 3 sections from cranial to caudal are represented by the symbols: P (parietal), Os (occipital superior) and Oi (occipital inferior). The 0 area in the construction of the ellipsoidal skeletal support wreath corresponds to the area directly distally to the five cylindrical slots (II.5, fig.1,2), responsible for the accommodation of the perpendicular girders (III, fig.1,2), where the inclinations of the skeletal support wreath are zero (II, fig.1), while the 0.5 area corresponds to the area of the midsagittal plane on the dorsal surface of the user's head, where the ellipsoidal skeletal support wreath displays the maximum inclinations calculated through the angles DPrear, Dos and Doi. At 0.25 position the ellipsoidal skeletal support wreath (II, fig.1) receives inclination values in its upper, middle and lower parts according to the angles DPrear1 = DPrear/2, DOs1 = DOs/2 and DOi1= DOi/2. The same applies to the left side of the ellipsoidal skeletal support wreath (II, fig.1).

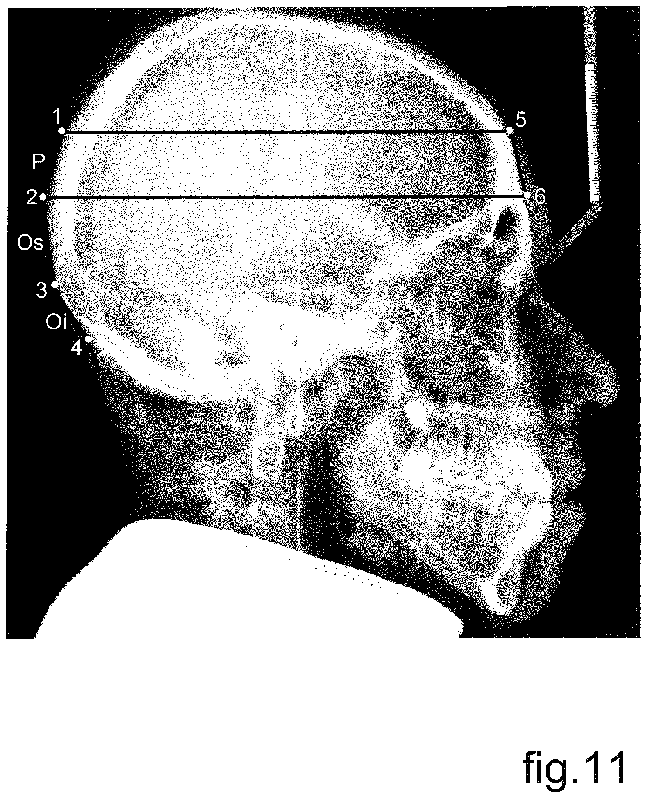

In **figure 11,** the 3 parts of the ellipsoidal skeletal support wreath (II, fig.1) with their different lengths in the midsagittal plane region according to the skeletal inclinations of the skull in the dorsal region of the parietal bones and the occipital bone, with the help of a lateral cephalogram, are illustrated. P is the length of its upper part between the points 1 and 2, Os is the length of its middle part between the points 2 and 3 and Oi is the length of its lower part between the points 3 and 4. Between the points 5 and 6 the length corresponds to P, but in the midsagittal plane area of the frontal bone, which is affected by the inclination of the frontal bone (DPfront angle, fig.10). These lengths and inclinations are used in the computer-aided design (CAD) of the ellipsoidal skeletal support wreath (II, fig.1).

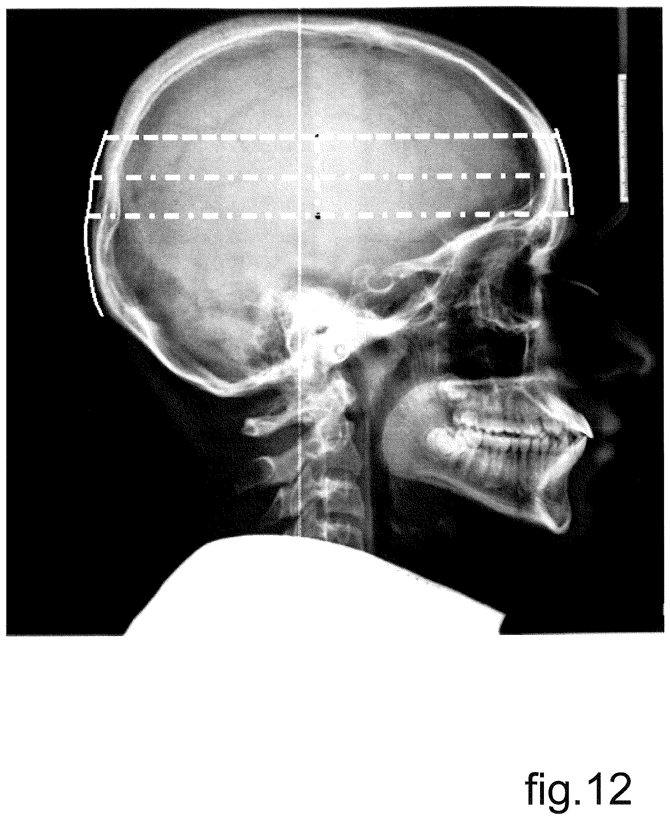

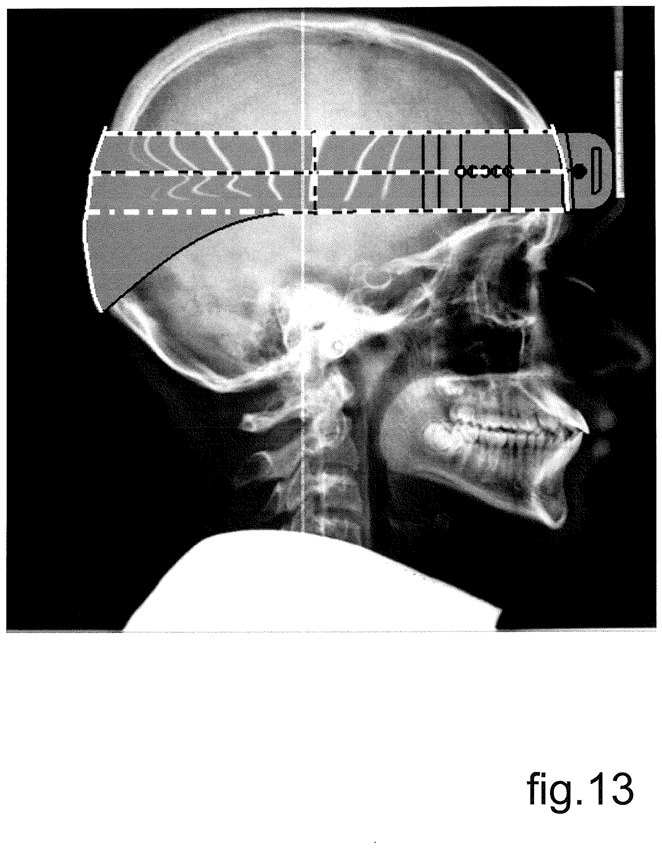

In **figures 12 and 13,** steps of the computer-aided design (CAD) of the ellipsoidal skeletal support wreath (II, fig.1) using only the lateral cephalogram are illustrated.

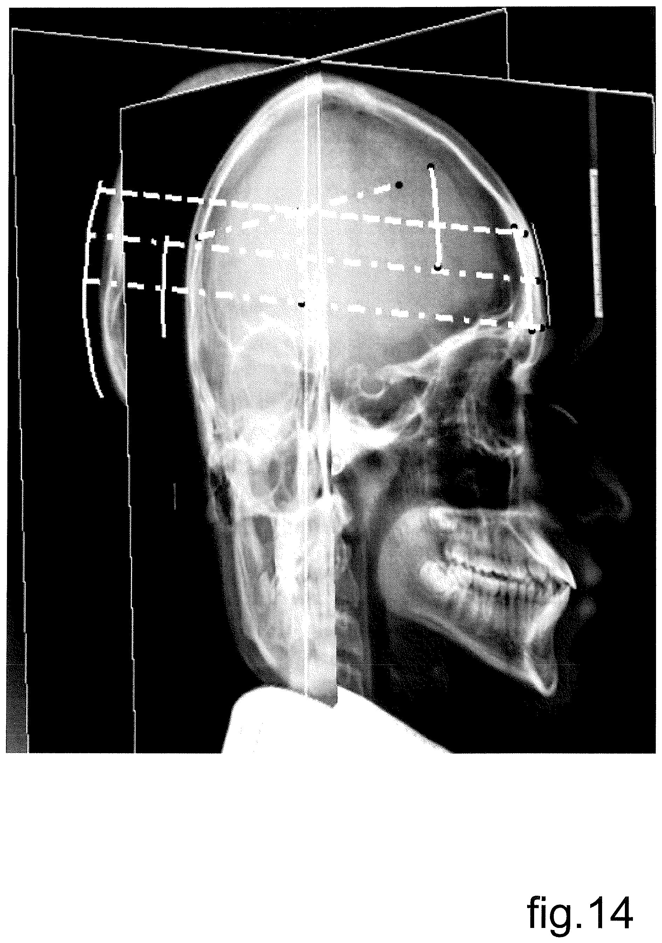

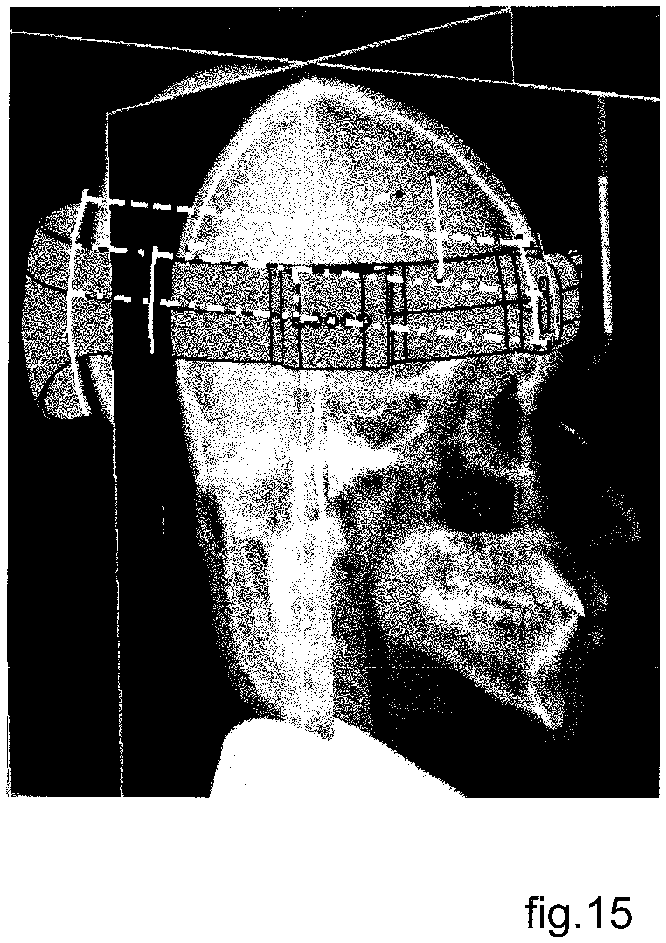

In **figures 14 and 15,** steps of the computer-aided design (CAD) of the ellipsoidal skeletal support wreath (II, fig.1) with the help of lateral and anteroposterior cephalograms are illustrated.

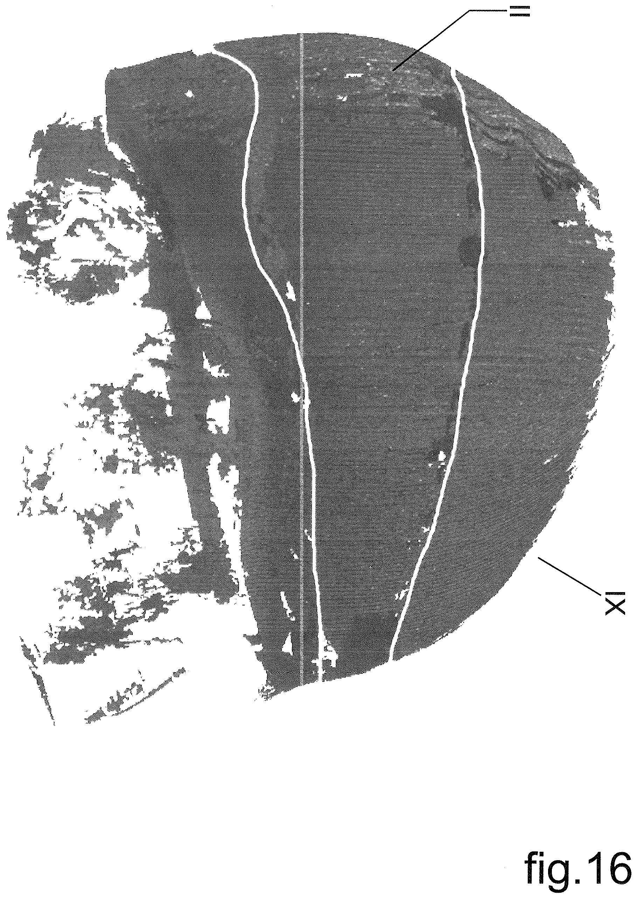

In **figure 16,** a step of the computer-aided design (CAD) of the ellipsoidal skeletal support wreath (II) after scanning of the user's neurocranium (IX) using a structured light 3D scanner and point processing followed by geometric model development with the help of a computer soft-ware program, is illustrated.

## DEVICE OPERATION

Initially, the "rapid palatal expansion" using the alternate way [5-7] is performed by any intraoral device [1-4, 8]. As an example, we mention the "Hyrax" device banded to the maxillary posterior teeth by glass-ionomer cement. In the buccal aspects of the bands, metallic bars, which have a circular bend at their front ends, in the canine area, in order to be intraorally attached to the elastic bands, are welded. On the first permanent maxillary molars and on the second deciduous maxillary molars, when they are in the mouth, we place fixed bite-planes of a visible light-cure material about 3 mm in height to impede the maxillary molar extrusion, which is followed by downward and backward rotation of the mandible, by the opening of the mid-palatal suture by the use of the "Hyrax" device. The bite planes are controlled on each visit to check for occlusal imprints of the mandibular teeth, which would obstruct the forward maxillary movement and are repaired accordingly.

The extraoral orthopedic device (I, fig.1-7) is applied immediately after the disarticulation of the circumaxillary sutures aiming at an adequate maxillary protraction.

First, the ellipsoidal cranial support wreath (II, fig.1-3), which consists of a plastic material (ABS) of different width and thickness and bears the elastic fixation strap (VII) is placed on the neurocranium (IX, fig.1-3). After that, the loose fixation strap (VII) is hung around the belt (VIII), which is worn around the user's waist or on the trunk under the armpits. Afterwards, the ellipsoidal cranial support wreath (II, fig.1-3) is fixed to the periphery of the user's head through the tightening mechanism (II.1-4, fig.1,2) and the elastic fixation strap (VII, fig.3,7), and finally, the adjustment of the remaining parts of the extraoral orthopedic device follows.

The front part of the ellipsoidal cranial support wreath (II, fig.1), and lateral parts laterally distally to the lateral canthi, are comparatively bulky in order to accommodate the tightening mechanism (II.1-4, fig.1,2) in its central part and laterally the perpendicular cylindrical girders (III, fig.1,2) through vertical slots (II.5, fig.1) for fastening in distinct positions. A thread (II.6) and a fixing screw (II.7) corresponds to each slot (II.5).

The part of the ellipsoidal cranial support wreath (II, fig.1), directly behind the slots, (II.5, fig.1,2) responsible for the proper adjustment and immobilization of the perpendicular cylindrical girders (III, fig.1), preserves the thickness and width of the frontal part of the cranial support and increases in width as it enters the dorsal part of the parietal bones, so that it usually comprises a small portion of the lambdoid suture (II, fig.3). For better pressure comfort, a thin strip of an internal soft inlay is used both in the ventral (II.8, fig.1) and in the dorsal parts and sometimes in its lateral parts for an even better fit, but also a restraint during operation of the device.

After the placement and partial immobilization of the ellipsoidal skeletal support wreath (II, fig.1) through the tightening mechanism (II.1-4, fig.1,2) and the elastic fixation strap (VII, fig.3,7), the perpendicular girders (III), are adjusted in their respective slots depending on the width of the user's face, individualized right distal of the lateral canthi on the right and left side of the user's head. Then, they are adjusted in height in perfectly symmetrical positions on the right and left side with the help of the markings (III.6, fig.4,5) and are fixed by means of small fixing screws (II.7, fig.1,2).

Then, the horizontal girder (IV, fig.1,2) is adjusted perfectly to the transverse plane by varying its width (telescopic function) according to the width of the user's face. First, its cylindrical extreme parts (IV.1, fig.1,2) are placed vertically in the slots (III.3) of the perpendicular girders (III) and symmetrically with the help of their markings (IV.6). Then, its central part (IV.3) is placed sliding into the middle of the face according to the line passing through the middle of the philtrum of the upper lip and the Glabella (middle of the face). With the help of the markings (IV.7) bearing the parts IV.2 of the horizontal girder (IV), we can detect and measure, if required, any asymmetry in width between the left and the right sides of the face of the respective user. Its height adjustment, which also affects the angle of traction of the maxilla, is also accurately achieved in any user skull, due to the above-mentioned properties of the metal girders of the herein-described device, which are extensively mentioned in the chapter: "DESCRIPTION OF DRAWINGS". Its final immobilization in the perpendicular girders is achieved by means of the fixing screws (III.5, fig.2), while its immobilization in width by means of the fixing screws (IV.4).

Afterwards, the elastic fixation strap is adjusted (VII, fig.7) taking its correct length through its tensioner (VII.1, fig.7) and it is immobilized on the belt (VIII), around which it is initially suspended, in position VIII.1 (fig.7). In this way the skeletal support wreath (II) is fixed to the neurocranium (IX) and the risk of dislodgment during the operation of the device is eliminated.

Finally, elastic traction bands (V, fig.1,2) are applied in order to protract the maxilla. Initially, the elastic bands are attached intraorally on the lateral hooks of the intraoral device (VI, fig.1,2) and afterwards extraorally on the two mounting screws (IV.5, fig.2) of the horizontal girder (IV, fig.1,2). The extraoral attachment of the elastic bands is achieved ergonomically and absolutely symmetrically on the right and left side of the user's head, also with respect to the user's rima oris width, avoiding a trauma of the oral commissures, thanks to the various attachment positions (IV.9, fig.1,6) on the central part (IV.3, fig.1,2,6) of the horizontal girder (IV).

Summarizing, we emphasize that this is an extraoral orthopedic device, which can greatly help in the therapeutic modification of the maxillary and mandibular growth in skeletal Class III and Class II patients when it is used in cooperative, growing young people. Its main advantages are:

1. Because of its skeletal anchorage primarily to the neurocranium and partly around the waist or on the trunk of each user, during maxillary protraction, there is no pressure on the mandible, thus avoiding any adverse effect on the temporomandibular joint due to injury during its use and of the enlargement of the oral cavity, with all the benefits this implies.

2. Easy use of the device, not only in the therapy of skeletal Class III patients, but for the aetiologic therapy of skeletal Class II patients, even in the cases of Angle Class I or Class II malocclusions with retrognathic maxilla and mandible within the face, which, until now, is not the case by using extraoral or intraoral devices. Particular mention of the use of this device is also made for operated cleft lip and palate patients, whose maxilla is often retrognathic due to the scars created by the operations on the upper lip and maxilla. These scars impede the physiologic growth of the maxilla, but the mandible usually has a physiologic position in the patient's skull.

**3.** Optimum symmetry in device settings, when our device is used on the user's skull in a versatile and safe manner. The applying elastic bands can be attached in the direction desired by the orthodontist both vertically and transversely, due to the ergonomic and practical design. There is also the possibility of ascertaining an asymmetry in the width of the face between the left and right halves due to the extremely precise design of the horizontal girder (IV), but without this affecting the symmetry of the maxilla's protraction.

Lastly, parts of this device could be manufactured with materials other than those mentioned. Indicatively, the carbon fiber material for the construction of the cranial support wreath is mentioned, which is extremely lightweight and durable. Other materials with similar properties to those of thermoplastic (ABS or ABS-ultra) could be used, but with a more ecological footprint (biodegradable). The aluminum girders, vertical and horizontal, could also be substituted by stainless steel girders, a material that can also be reused after sterilization.

The plastic dorsal part of the ellipsoidal skeletal support wreath, could be substituted with elastic material for easier application of the wreath to the diversity of human skulls, but also to the hair volume of many users, especially women, and still retain its shape. Velcro type fasteners, clamping regulators between the skeletal support wreath sections could also be integrated.

Different thicknesses in the soft internal inlay, depending on the hair volume of each user, could be an additional service to each user.

**An improved version** of the above-described skeletal support wreath is **the complete removal of the tightening mechanism from its frontal area,** which could be a significant improvement to the comfort of its being worn around the user's head. This is due **to the excellent anatomical design and fit of the skeletal support wreath and the combination of the wreath's support with the elastic fixation strap and the belt.**

## IMPLEMENTATION - METHODS OF DESIGN AND MANUFACTURING OF THE ELLIPSOIDAL SKELETAL SUPPORT WREATH

Two main problems were identified through the computer-aided design (CAD) and simulation of the operation and durability of the device: **A.** When the device was loading (protraction of the maxilla, mainly forward and downward) a tendency of the cranial support wreath to move upwards and forwards (torque) was developing reactively. Regardless of the tightening mechanism's activation in the frontal area of the wreath, this problem could not be solved permanently. The excessive pressure on forehead skin, due to the lack of a sufficient muscular substratum under the skin and hair, which would act as a «cushion», could lead to such a pain in the user's forehead that their trouble-free cooperation could be greatly impeded. **B.** The anatomical difference in perimeter and shape of human skulls due to age, gender and ethnicity leads to failure in an effective application of the skeletal support wreath, so that it is placed on the skull like a key in a lock (perfect fit).

## 1. METHOD OF DESIGN AND MANUFACTURING THROUGH A PARAMETRIC MODEL

A parametric model (fig.8-11) was created to solve the above -mentioned problems, which would be able to lead to the computer-aided design (CAD) of an effective, individualized skeletal support wreath and to its computer-aided manufacturing (CAM).

Calculation of parameters: **a.** First, the shape of the user's head is determined in the central area of placement of the ellipsoidal skeletal support wreath on the forehead with the help of a soft brass wire and the application of sufficient pressure on it, following the same horizontal plane, in which the wreath extends backwards. This is parallel to the ground with the user having their head in the natural head position. The parameters, A, B and C (fig.8,9) are calculated through this brass wreath, as explained below.

**b.** The maximum circumference of the user's head passing around the forehead and the parietal eminences is measured with the help of a soft tape-measure and the application of relatively light pressure. This measurement due to the exercise of light and not heavy pressure, takes into account more accurately the thickness of the skin and hair. The length of the arch between the user's lateral canthi (right and left arch) is also measured with the help of a soft tape-measure and it is initially placed as a single arc on the corresponding part of the user's head circumference (points D1 and D2, fig.8,9), which determines the parameters: Dleft and Dright (fig.8,9). Finally, the distance from the root of the nose (N, Nasion) to the middle of the distance, between the middle eyebrow (Gb, Glabela) and the beginning of the scalp (Tr, Trichion), under normal scalp conditions, is also included in the clinical measurements. This measurement is used in the computer-aided design and manufacture of the frontal part of the skeletal support wreath.

**c.** The remaining parameters are calculated through the study of the lateral cephalogram, as is described (PARAMETRIC MODEL) below.

It should be emphasized that simple means were initially used to calculate the parameters, but not due to a simplistic approach. The choice was made after the exhaustion and rejection of other complex methods and techniques [32-34]. Therefore, the experienced clinician can accurately (1:1) calculate the parameters: A, B, C, Dleft and Dright. The complex and costly technique of a 3D photogrammetry of the user's head lags significantly behind the calculation of the specific parameters [32], due to the hair and the thickness of the soft tissues (epidermis, dermis, adipose or subcutaneous tissue and muscle substratum).

The CAD-creation of the skeletal support wreath could accurately and more easily be achieved with the help of information received from the cone beam computed tomography (CBCT) [33,34], which is due to its three-dimensional structure. On the other hand, the negative effect of ionizing radiation on the human body, especially on children, should not be forgotten, which acts cumulatively and which, in the case of CBCT [34-39], is capable of being much higher than the radiation received by the orthodontic patient through a digital lateral cephalogram [40], which will be taken anyway, in the context of an orthodontic treatment.

Then follows the calculation of the maximum perimeter of the two intersecting ellipses that make up the overall shape of the human skull in this horizontal plane. After studying several hundred figures of the perimeter of human skulls in the transverse plane with the above-mentioned "brass wire technique", as well as a thorough study of the anatomy of the human skull, it was observed that the overall shape of the perimeters of these human skulls is roughly composed of the junction of two intersecting ellipses, a narrow anterior and a wider posterior one, which have in common the small axis, $P1P2 = 2C$, at their intersection (fig.8). The value of the perimeter of the front ellipse is obtained through the mathematical formula: $p \approx \pi[3(A+C)-\sqrt{(3A+C)(A+3C)}]$ and the value of the perimeter of the rear ellipse (fig. 8,9) is also calculated through the mathematical formula: $p \approx \pi[3(B+C)-\sqrt{(3B+C)(B+3C)}]$. The total head circumference of the user's head is easily calculated by adding the halves of the contours of these two ellipses, with the help of the Excel program.

First, the perimeter of the user's head in the area of the skeletal support wreath placement is calculated, according to the shape of the user's head, which has been created with the help of the "brass wire technique". This circumference is slightly smaller in comparison to the circumference measured with a soft tape-measure, as explained above. Then, in order to obtain the final circumference and hence the final values of the parameters A, B and C, a further 10 mm is added to this circumference, because the wreath is printed via the 3D printer with the tightening mechanism always open (mechanism of 10 mm maximum tightening). Another 10-15 mm is added to the calculation of the final perimeter, due to the thickness of the internal soft inlay, which is used and can be made of natural or artificial leather, foam or sponge material, cotton or soft medical silicone or any other anti-allergic material compatible with the human skin and forms the "cushion" that helps in the final squeezing of the tightening mechanism and stabilization of the wreath.

## PARAMETRIC MODEL

The following elements were taken into account mainly for the creation of the parameters of this model: the shape of the circumference of the user's skull in the region of the ellipsoidal skeletal support wreath's placement, the perimeter of the user's skull, the distance between the lateral canthi of the user's eyes measured archwise in the region of the wreath's placement on the frontal bone and the distance from the root of the nose (Nasion) to the midpoint of the width of the skeletal support wreath in the region of the frontal bone. In this way, an individualized skeletal support wreath for each user with a quite accurate fit, without the use of the cone beam computed tomography (possibility of absolutely accurate 3D imaging, but at the price of high radiation dose) was created. To achieve this purpose, a 3D parametric model was created based on 15 parameters: A, B, C, Dleft, Dright, P, DPfront, DPrear, DPrear1, Os, DOs, DOs1, Oi, DOi, DOi1 (fig.8-11).

The ellipsoidal skeletal support wreath consists of two parts: the anterior and the posterior or occipito-parietal. The occipito-parietal part, which mainly concerns the occipital bone, but also the parietal bones, provides the main support (fig.10), starts behind the user's auditory pinna on the posterior external surface of the temporal bones and in part of the parietal bones and it moves towards the occipital bone, increasing in width and creating its maximum depressions in the areas on each side of the external occipital protuberance and the superior nuchal lines. This part was sectioned into three segments (parameters: P from parietal, Os from occipital superior and Oi from occipital inferior) that are joined smoothly together and have different inclinations (DPrear, DPear1, DOs, DOs1, DOi, DOi1) in accordance with the anatomy of the supporting bones (study of skull anatomy by lateral cephalometric radiography - fig.11).

The upper segment, P, about 2-3 cm wide - depending on the anatomy of the skull - but of equal width to the anterior part of the wreath on the frontal bone, which comprises the tightening mechanism, is located mainly in the planum occipitale of the occipital bone, but also above the lambdoid suture in part of the parietal bones and is formed at an angle (parameters DPrear and DPrear1), which varies according to the anatomy of these bones (fig.10,11). The skeletal support wreath in its upper section has the same width circularly, as the width of the P segment of its occipito-parietal part, in the context of its manufacture by means of a filament 3D printer. The anterior and posterior or occipito-parietal parts of the wreath display different inclinations. The maximum inclination (parameter DPrear, fig.10) corresponds to the region of the planum occipitale and above it in the midsagittal plane. This inclination (parameter DPrear, fig.10) decreases gradually from the midsagittal plane region in the occipital bone to the region behind the user's external auditory canal in the temporal bone, in which region it receives a value of 0 degrees (fig.10). In the middle of this route, it also receives a value equal to the angle which corresponds to the parameter DPrear1 = DPrear/2 (fig.10).

The middle segment, Os, about 2-3 cm wide, depending on the anatomy of the user's skull (fig.10,11), is also created parametrically. This part comprises the region between the occipital bone area and the area behind the user's external auditory canal (fig.10). In the region of the occipital bone in the midsagittal plane, it achieves its largest width (parameter Os, fig.10). Its maximum inclination (parameter DOs, fig.10) corresponds to the region of the occipital bone in the midsagittal plane. This inclination (parameter DOs, fig.10) decreases gradually from the midsagittal plane region in the occipital bone to the region behind the user's external auditory canal in the temporal bone, in which region, it receives a value of 0 degrees (fig.10). In the middle of this route, it receives also a value equal to the angle, which corresponds to the parameter DOs1 = DOs/2 (fig.10).

The caudal segment of the occipito-parietal part, Oi, about 1-2 cm wide, is also created parametrically. This part extends over the region of the occipital bone (fig.10). In the midsagittal plane of this region, it achieves its largest width (parameter Oi, fig.10). Its maximum inclination (parameter DOi, fig.10) corresponds to the region of the supreme nuchal lines and above the external occipital protuberance and the superior nuchal lines, because these areas are areas of attachment mainly of the trapezius muscle (musculus trapezius) and the semispinalis capitis muscle (musculus semispinalis capitis). This inclination (parameter DOi, fig.10) decreases gradually from the midsagittal plane region in the occipital bone to the region behind the user's external auditory canal in the temporal bone, in which region it receives a value of 0 degrees (fig.10). In the middle of this route, it also receives a value equal to the angle, which corresponds to the parameter DOi1 = DOi/2 (fig.10).

In this way, the occipito-parietal part of the wreath creates a comfortable place for the posterior region of the user's head.

This quite accurate fit, close to the anatomy of the human skull, creates such friction as to help to counteract the torque responsible for the dislodgment of the wreath during the loading of the extraoral orthopedic device. In the area of the frontal bone between the region of the slots, in which the perpendicular girders are accommodated, the wreath displays an inclination in accordance with the anatomical shape of the frontal bone (measured by means of the lateral cephalogram - parameter DPfront, fig.10,11).

Due to the geometry of this design of the ellipsoidal skeletal support wreath by means of a computer program (CAD), the final values of the above-mentioned parameters/angles are calculated as follows: Dleft equal to the original measure, Dright equal to the original, DPrear equal to the original, DPfront = 1/10 of the original, DOs = 3-15 degrees greater than the original and DOi = 3-5 degrees greater than the original. The final values of DPrear1, DOs1 and DOi1 are equal to half of the final values of DPrear, DOs and DOi, respectively. Through these adjusted final values, a better fitting of the skeletal support wreath to the user's neurocranium is achieved.

When setting up the parametric model, the following were used to define the parameters: Determination of the shape of the skull circumference of each user using the "brass wire technique", which is then digitized 1:1. According to this technique, an elastic strap approximately 8 mm wide is placed in the middle of the user's forehead and, by pressing the scalp and skin, extended backwards, parallel to the ground, when the user's head obtains its natural head position. Subsequently, the 1 mm diameter soft brass wire in the middle of the width of the elastic strap is adjusted and after it has taken the shape of the skull circumference using pressure with the fingers, it is immobilized joining the two free ends with the help of photopolymerizable resin. Finally, the brass wire wreath is digitized 1:1 and printed out. The parameters A, B, C, Dleft and Dright are calculated by means of the printed 2D wreath (fig.8). The measurement of the maximum perimeter of the user's head (measured with a soft tape-measure at the region of the skeletal support wreath's placement), is taken approximately 2-3 cm above the eyes in the region of the frontal bone and crosses the area of the parietal eminences and the supreme nuchal lines of the occipital bone.

On this digitized perimeter of each skull, the vertices of the curvatures, F (frontal) in the anterior and O (occipital) in the posterior region (fig.8) are marked and the line segment, FO, is created. Then the point on one side, left or right, corresponding to the vertex of the curvature of the parietal eminence P1 or P2 (fig.8), located approximately in the middle of the parietal bone, is marked on the digitized perimeter and this anatomical position defines the widest point of the perimeter of the human skull. From this point, a perpendicular line to the line segment FO is drawn, which usually crosses the other point P2 or P1 of the parietal eminence on the other side. The point K corresponds to the intersection of the line segments, FO and P1P2 (fig.8).

The line segment, P1P2 is regarded as the common axis of the 2 ellipses of the human skull, the anterior, which is usually narrower and the wider posterior one. The major semi-axis of the anterior ellipse is defined as A and the major semi-axis of the posterior as B. C is defined as the common minor semi- axis of both ellipses (fig.8,9). The points D1 and D2 are marked on the digitized perimeter (fig.8,9) according to the measured length of the two arches in the area of the skeletal support wreath placement on the frontal bone, approximately 2-3 cm above the eyes and between the lateral canthi. One arch is measured in accordance with the left side (middle of the frontal bone in the midsagittal plane - left lateral canthus) and the other in accordance with the right side (middle of the frontal bone in the midsagittal plane - right lateral canthus). After that, the two line-segments, KD1 and KD2 are traced. In this way, two angles are created, FKD1, which corresponds to the value of the Dleft parameter and FKD2, which corresponds to the value of the Dright parameter (fig.8). The value of the perimeter of the anterior ellipse is obtained with the help of the mathematical formula: $p \approx \pi[3(A+C)-\sqrt{(3A+C)(A+3C)}]$, and the value of the perimeter of the posterior ellipse is also calculated with the help of the mathematical formula: $p \approx \pi[3(B+C)-\sqrt{(3B+C)(B+3C)}]$, (fig.8,9). The total perimeter of the user's head is finally calculated by adding the halves of the perimeters of these two ellipses. However, the actual physical perimeter is already known, since it is measured with a tape-measure directly on the user's head. In this actual physical perimeter, the values of the parameters, A, B and C, are initially and subsequently adjusted, as explained above. After these calculations, the value of the final perimeter based on the corresponding values of the parameters, A, B, C, Dleft and Dright is obtained and the skeletal support wreath is printed, in accordance with this perimeter, with the help of a 3D printer.

The remaining ten parameters, P, DPfront, DPrear, DPrear1, Os, DOs, DOs1, Oi, DOi, DOi1 (fig.10,11), are calculated through the lateral cephalogram (fig.11).

The initial 3D computer-aided design and manufacture (CAD/CAM) of the ellipsoidal skeletal support wreath based on the parametric model of the 15 parameters mentioned above, has already been described. Two more models were created, in order to exhaust the possibilities of manufacturing a skeletal support wreath with the help of only two-dimensional digital cephalometric radiographs of a very low radiation dose.

In the first of these, only the lateral cephalogram is available (fig.11), as in the original design. All the parameters, except the DPfront parameter, are set into the 3D design program. Hereinafter, the lateral cephalogram at a scale of 1:1 is entered and finally, the curvatures of the wreath in the anterior and posterior regions of the skull are created with the use of the designing tools of the computer soft-ware program, as shown in figures 12 and 13.

In the second design, the lateral and the anteroposterior cephalograms are available as a 1:1 digital file. Only the parameters: A, B, C, Dleft, Dright and P are entered into the 3D design program, followed by the lateral and finally, the anteroposterior cephalogram. The positioning of the anteroposterior cephalogram in the vertical plane, is achieved by identifying the two cranially located circumferences of the skull (fig.14,15) and in the midsagittal plane, its positioning is vertical to the lateral cephalogram and in accordance with the parameters A and B (the anteroposterior cephalogram passes through the common minor axis 2C). Then, the anterior and posterior curvatures of the skull are drawn in the region of the midsagittal plane according to the lateral cephalogram and the 2 lateral curvatures according to the curvatures obtained by the anteroposterior cephalogram, as shown in figures 14 and 15.

## 2. METHOD OF DESIGN AND MANUFACTURING BY MEANS OF 3D DIGITAL DATA ACQUISITION OF THE NEUROCRANIUM

The enemy of the good is the best, perfection is unachievable and improvements will always exist. Thinking in this way and trying to exhaust the optimization of the invented device with the help of cutting-edge technology at the current level of science, but using non-invasive methods, which would not harm the user's health, even in the slightest way, such as the use of the relatively high dose of radiation involved in CBCTs, a structured-light 3D scanner was used in the workflow of a more accurate creation of the skeletal support wreath.

This was achieved either by digitizing the anatomy of the user's neurocranium in the region of the skeletal support wreath placement, or by digitizing the geometry of the wreath created with impression material, as described below and with the help of "reverse engineering".

An elastic cover, such as an elastic swimming cap, is placed on the user's head. If the user has lush and long hair, an elastic cap with a large perforation on its top could be used, so that the greater volume of hair can be collected outside the elastic cap and kept away from the scanning areas, where the skeletal support wreath is placed.

The shape of the skeletal support wreath can be outlined with a marker pen on the elastic cover by enclosing completely the surfaces of its placement, above, left and right of the external occipital protuberance. Moving further forward, the shape of the skeletal support wreath can be traced, bypassing the auditory pinna. After that, the area distally to the lateral canthi can be marked, where the line segments KD1 and KD2 pass (parametric model, fig.8,9) and the center of the user's forehead in height and width, which also corresponds to the center of the tightening mechanism (II.1-4, fig.1,2). The shape, the form and the locations of the particular features of the wreath have thus been roughly traced with the marker pen on the elastic cover on the user's head and thereafter, the digital procedure can be followed by two modes of digital 3D data acquisition:

First, the wreath can be roughly created, directly on the skull within the traced contour, with the help of an impression material, such as polysiloxane (addition silicone type) or a thermoplastic material, such as those used in the manufacture of masks to immobilize the user's head, in particular during radiotherapy (radiotherapy immobilization devices). After the polymerization of the impression material, the inner surface of the wreath, which corresponds to the anatomy of the outer surface of the neurocranium can be scanned. In this way, the geometry of the neurocranium, created with the help of the impression material, using a reverse engineering technique, can be digitized.

Secondly, the areas of the neurocranium that are within the traced contour can be directly scanned and then the point processing (fig.16) and the geometric model development can be done with the help of computer soft-ware programs. The measurement of the length of the two arches from the center of the user's forehead on the left and right to the lateral canthi also can provide corresponding relevant information, according to which, the digital placement of both the tightening mechanism and the cylindrical slots (II.5, fig.1,2) in the skeletal support wreath (II) can be achieved. Thus, the skeletal support wreath can be digitally created (CAD). After that, it can be digitally enlarged in order to receive the internal soft inlay and with the tightening mechanism in its frontal area open, as already explained in the chapter: "METHOD OF DESIGN AND MANUFACTURING THROUGH A PARAMETRIC MODEL". Finally, it can be printed (CAM) using a 3D printer.

Its effectiveness in terms of the skeletal support of the invented extraoral orthopedic device and the comfort of the user during its application through this latest design, is superior to all the aforementioned designs, because it can respond with much greater precision to the anatomy of the head of each user. It is no longer **an ellipsoidal wreath,** but a **wreath of cranial shape and form,** which can correspond perfectly to the anatomy of the user's head. It is also emphasized here, that within the parametric model, C was taken as the average of the C of the right and C of the left side (fig.8,9). When studying the anteroposterior cephalograms, asymmetry between the right and left side in the parietal bone region is also often seen, which is not generally visible due to the scalp. We also mention that the 'brass wire technique', although very accurate due to its simplicity, is still performed by human hand and by a different investigator each time and with different skills, which may lead to non-identical measurements from the same person. Objectively, however, in growing people, each human skull has a shape and a form at the specific moment of measurement.

Measurements **by mechanical means,** in our case, measurement with the 3D structured-light scanner, are not associated to such **subjective** errors. The prerequisite is of course that the digital impression instructions (data acquisition instructions) mentioned above have been strictly kept, as well as the manufacturer's instructions, such as the correct setting (calibration) of the 3D scanner (scanning distance, room brightness, etc.). The only disadvantage of this technique is the need to process large information files, but this is easily solved by using computers capable of processing such large 3D files.

## REFERENCES

1. Haas AJ. Rapid expansion of the maxillary dental arch and nasal cavity by opening the midpalatal suture. Angle Orthod. 1961;31(2):73-90.

2. Biederman W. A hygienic appliance for rapid expansion. J Pract Orthod. 1968;2(2):67-70.

3. Haas AJ. Palatal expansion: Just the beginning of dentofacial orthopedics. Am J Orthod. 1970;57(3):219-55.

4. McNamara JA. An Orthopedic Approach to the Treatment of Class III Malocclusion in Young Patients. J Clin Orthod. 1987;21(9):598-608.

5. Liou EJ, Tsai WC. A new protocol for maxillary protraction in cleft patients: repetitive weekly protocol of alternate rapid maxillary expansions and constrictions. Cleft Palate-Craniofacial Journal, 2005;42:121-27.

6. Canturk BH, Celikoglu M. Comparison of the effects of face mask treatment started simultaneously and after the completion of the alternate rapid maxillary expansion and constriction procedure. Angle Orthod. 2015;85(2):284-91.

7. Liu W, Zhou Y, Wang X, Liu D, Zhou S. Effect of maxillary protraction with alternating rapid palatal expansion and constriction vs expansion alone in maxillary retrusive patients: A single-center randomized controlled trial. Am J Orthod Dentofacial Orthop. 2015;148(4):641-51.

8. Wilmes B, Nienkemper M, Ludwig B, Kau CH, Drescher D. Early Class III Treatment with a Hybrid-Mentoplate Combination. J Clin. Orthod. 2011;45(1):1-7.

9. Delaire J. Confection du masque orthopedique. Rev Stomatol. 1971;72(5):579-84.

10. Delaire VJ, Verdon P, Floor J. Ziele und Ergebnisse extraoraler Züge in postero-anteriorer Richtung in Anwendung einer orthopädischen Maske bei der Behandlung von Fallen der Klasse III. Fortschr Kiefer Orthop 1976;37:246-262.

11. Petit H. Adaptations following accelerated facial mask therapy in clinical alteration of the growth face. In: McNamara JA Jr, Ribbens KA, Howe RP (eds). Clinical Alteration of the Growing Face, monograph 14, Craniofacial Growth Series. Ann Arbor, MI: University of Michigan, 1983.

12. Turley PK. Orthopedic correction of Class III malocclusion with palatal expansion and custom protraction headgear. J Clin Orthod. 1988;22(5):314-325.

13. https://www.orthazone.com/Face-Mask-ReversePull-Headgear-T%C3%BCbinger-Model-dtu-109

14. https://www.google.com/search?client=firefox-b-d&q=sky+hook+head+gear

15. Hegmann M, Rüther AK. The Grummons face mask as an early treatment modality within a class III therapy concept. J Orofacial Orthop. 2003;64(6):450-6.

16. https://www.leone.it/english/services/download/Cat_Orthodontic_Eng.pdf

17. Alcan T, Keles A, Erverdi N. The effects of a modified protraction headgear on maxilla. Am J Orthod Dentofacial Orthop. 2000;117:27-38.

18. De Clerck HJ, Cornelis MA, Cevidanes LH, Heymann GC, Tulloch CJ. Orthopedic traction of the maxilla with miniplates: a new perspective for treatment of midface deficiency. J Oral Maxillofacial Surg. 2009;67(10):2123-9.

19. Yatabe M, Garib D, Faco R, de Clerck H, Souki B, Janson G, Nguyen T, Cevidanes L, Ruellas A. Mandibular and glenoid fossa changes after bone-anchored maxillary protraction therapy in patients with UCLP: A 3-D preliminary assessment. Angle Orthod. 2017 May;87(3):423-431.

20. Cha BK, Choi DS, Ngan P, Jost-Brinkmann PG, Kim SM, Jang Is. Maxillary protraction with miniplates providing skeletal anchorage in a growing Class III patient. Am J Orthod Dentofacial Orthop. 2011;139:99-112.

21. Pourcho WS. Orthodontic appliance. U.S. Patent number: 5158451, Oct 27, 1992.

22. Ngiam loachim. Mandibular advancement. U.S. Patent number: 0040301, Feb.16,2012.

23. DEL GOBBO WANDA. ORTHOPEDIC DEVICE FOR THE PROTRACTION OF THE MAXILLARY ARC. CPC: A61C7/06, IPC: A61C7/06, Publication info:WO2017089971 (A1) 2017-06-01.

24. KAHN SANDRA VIVIAN, FLORES CERCEDA MABEL, KAHN LEVENTHAL ILAN. MAXILLARY PROTRACTION DEVICE. CPC: A61B2560/0475, A61 B5/0008, A61B5/01, IPC: A61B5/00, A61B5/01, A61C7/06, Publication info: US2018028282 (A1), 2018-02-01; US10166089 (B2) 2019-01-01.

25. Orthodontic protraction appliance with head-chest bracing. US6213765B1, R. William Standerwick, Eric B. Fetchko, 2001-04-10.

26. Reverse pull, extraoral dental assembly with head and body. USOO5890891A, Walter A. Doyle, Apr. 6, 1999.

27. Cranial restructuring devices. WO 2020/254642 A1, PCT/EP 2020/067216, Patel Shailen, 24 December 2020.

28. KOUTZOGLOU STYLIANOS, KOUTZOGLOU ELENI. EXTRAORAL ORTHOPAEDIC DEVICE FOR THE DIRECT PROTRACTION OF THE MAXILLA AND THE INDIRECT PROTRACTION OF THE MANDIBLE. IPC: A61C7/06; A61C7/36; A61F5/56; CPC: A61C7/06 (EP,GR); A61C7/36 (GR); A61F5/05891 (EP); A61F5/56 (EP,GR); A61C7/36 (EP); Publication info: WO2021090035A1
Doi:https://worldwide.espacenet.com/patent/search/family/071120204/publication/ WO2021090035A1?q=WO% 202021%2F090035

29. Lorente C, Alfaro FH, Vela MP, Lorente P, Lorente T. Surgical-Orthodontic approach for facial rejuvenation based on a reverse facelift. Progress in Orthodontics (2019) 20:34 https://doi.org/10.1186/s40510-019-0287-8

30. Schwarz A. M.: Die Röntgenostatik. Urban & Schwarzenberg, Wien-Innsbruck 1958.

31. Yatabe M., Garib D.G., André de Souza Faco R, de Clerck H., Janson G, Nguyen T., Lucia Helena Soares Cevidanes L.H.S., Ruellas A.C. Bone-anchored maxillary protraction therapy in patients with unilateral complete cleft lip and palate: 3-dimensional assessment of maxillary effects. Am J Orthod Dentofacial Orthop. 2017 Sep;152(3):327-335 doi: 10.1016/j.ajodo.2016.12.024

32. Wellens HLL, Hoskens H, Claes P, Kuijpers-Jagtman AM, Ortega-Castrillon A. Three-dimensional facial capture using a custom-built photogrammetry setup: design, performance and cost. Am J Orthod Dentofacial Orthop. 2020;158:286-99.

33. Hans MG, Palomo JM, Valiathan M. History of imaging in orthodontics from Broadbent to cone-beam computed tomography. Am J Orthod Dentofacial Orthop. 2015;148:914-21. DOI: https://doi.org/10.1016/j.ajodo.2015.09.007

34. Velasco Regina Casian Ruiz, Liang Hui Cone-Beam Computed Tomography (CBCT) Applications in Dentistry. DOI:https://www.dentalcare.com/en-us/professional-education/ce-courses/ce531/overview

35. Yeh, JK., Chen, CH. Estimated radiation risk of cancer from dental cone-beam computed tomography imaging in orthodontics patients. BMC Oral Health 18, 131 (2018). DOI:https://doi.org/10.1186/s12903-018-0592-5

36. Dental Cone-beam Computed Tomography https://www.fda.gov/radiation-emitting-products/medical-x-ray-imaging/dental-cone-beam-computed-tomography#benefitsrisks

37. Safety and Efficacy of a New and Emerging Dental X-ray Modality. https://cordis.europa.eu/project/id/212246

38. Pediatric X-ray Imaging https://www.fda.gov/radiation-emitting-products/medical-imaging/pediatric-x-ray-imaging

39. Tatli U, Evlice B. Cone-Beam Computed Tomography for Oral and Maxillofacial Imaging.DOI: https://www.intechopen.com/chapters/56251

40. Signorelli L., Patcas R., Peltomäki T., Schätzle M. Radiation dose of cone-beam computed tomography compared to conventional radiographs in orthodontics. Journal of Orofacial Orthopedics / Fortschritte der Kieferorthopädie. 2016 Jan;77(1):9-15. doi: 10.1007/s00056-015-0002-4.

## TABLE OF REFERENCE SIGNS OF DRAWINGS

| | |
|---|---|
| **I:** | The extraoral orthopedic device for the protraction of the jaws |
| **II:** | The ellipsoidal skeletal support wreath |
| **II.1:** | The screw of the tightening mechanism |
| **II.2:** | The rivet of the tightening mechanism |
| **II.3:** | The guide of the tightening mechanism |
| **II.4:** | The guide intake cavity of the tightening mechanism |
| **II.5:** | The cylindrical slots, responsible for the placement of the perpendicular girders (III) |
| **II.6:** | The threads for the attachment of the fixing screws (II.7) |
| **II.7:** | The fixing screws, responsible for the immobilization of the perpendicular girders (III) |
| **II.8:** | The internal soft inlay of the ellipsoidal skeletal support wreath |
| **II.9:** | The attachment position of the elastic fixation strap (VII) in the ellipsoidal skeletal support wreath (II) |
| **III:** | The perpendicular girders |
| **III.1:** | The cranial-part of the perpendicular girders |
| **III.2:** | The tail-part of the perpendicular girders |
| **III.3:** | The cylindrical slots of the perpendicular girders, responsible for the placement of the horizontal girder (IV) |

(continued)

| | |
|---|---|
| III.4: | The threads for the attachment of the fixing screws (III.5) |
| III.5: | The fixing screws, responsible for the immobilization of the horizontal girder (IV) |
| IV: | The horizontal girder |
| IV.1: | The cylindrical extreme parts of the horizontal girder, which are inserted into the perpendicular girders. |
| IV.2: | The parts of the horizontal girder, which are joined articulated at a right angle with its cylindrical extreme parts and are straight and have the shape and form of a cuboid. |
| IV.3: | The central part of the horizontal girder (IV), which has the shape of a concave cuboid. |
| IV.4: | The fixing screws, which are responsible for the immobilization of the two parts (IV.2) of the horizontal girder (IV), when they have taken their final position by sliding into its central part (IV.3). |
| IV.5: | The mounting screws, responsible for the attachment of the elastic bands (V) |
| IV.6: | The markings on the free end of the cylindrical extreme parts (IV.1) of the horizontal girder (IV), in order to ensure their symmetrical insertion into the tail-part of the perpendicular girders (III.2). |
| IV.7: | The markings on the IV.2 part of the horizontal girder (IV) |
| IV.8: | The concave area of the non-solid parts (IV.2) of the horizontal girder (IV) |
| IV.9: | The internal threads for the attachment of the mounting screws (IV.5) |
| IV.10: | The cavities in the central part (IV.3) of the horizontal girder, which serve the telescopic function of the horizontal girder, when its cuboidal parts (IV.2) slide into its central part (IV.3). |
| V: | The elastic bands |
| VI: | The intraoral mechanism |
| VII: | The elastic fixation strap of the ellipsoidal skeletal support wreath |
| VII.1: | The tensioner of the elastic fixation strap (VII) |
| VIII: | The belt around the patient's waist |
| VIII.1: | The position on the belt (VIII), on which the elastic fixation strap is finally immobilized. |

## Claims

1. An extraoral orthopaedic device (I) for the direct protraction of the maxilla and the indirect protraction of the mandible, comprising:

   an ellipsoidal skeletal support wreath (II) which can be placed on the periphery of the user's neurocranium (IX), a horizontal girder (IV), which can be coupled through elastic bands (V) with an intraoral mechanism (VI) and perpendicular girders (III), which can couple the said ellipsoidal skeletal support wreath (II) with the said horizontal girder (IV) and

   - the said ellipsoidal skeletal support wreath (II) which can be secured to the periphery of the user's neurocranium (IX), comprising a tightening mechanism (I1.11-4) in its frontal area, and a first means of adjustment and support (II.5-7) in its lateral area to ensure the proper individualized placement and safe immobilization of the two said perpendicular girders (III) and
   - the said perpendicular girders (III) comprising a second means of adjustment and support (III.3-5) to ensure the individualized placement of the said horizontal girder (IV), aiming to optimize the direction and tension of the elastic bands (V),

   the extraoral orthopedic device (I) being **characterized by**:

   the said ellipsoidal skeletal support wreath (II) being adapted to be placed on the periphery of the user's neurocranium (IX), being ellipsoidal in shape and being fully adapted to the anatomy of the neurocranium, the said ellipsoidal skeletal support wreath (II) being adapted to be placed on the periphery of the user's neurocranium (IX), being adapted to be fixed in position, throughout the use of the device, by its full anatomical shape, the tightening mechanism (II.1-4) in its frontal area and the elastic fixation strap (VII) in its dorsal area in conjunction with a belt (VIII), said belt being adapted to be fitted around the user's waist or trunk, the tightening mechanism (II.1-4) being of guided-adjustable type and being adapted to stabilize the ellipsoidal skeletal support wreath (II) partially with the help of a screw, according to the perimeter of the user's head,

the ellipsoidal skeletal support wreath (II), which can be placed on the periphery of the user's neurocranium (IX), comprising the first means of support (II.9) for the elastic fixation strap in its dorsal area, through which it is coupled with the belt (VIII), which can be passed around the user's waist or trunk,

the elastic fixation strap (VII) comprising the first means of adjustment (VII.1) which can be used after being hung on the belt (VIII) to obtain optimal length,

the above-mentioned belt (VIII), which can be fitted around the user's waist or trunk comprising the first means of support (VIII.1) for the elastic fixation strap (VII) of the ellipsoidal skeletal support wreath (II) peripherally to the user's neurocranium (IX), which first means of support (VIII.1) can immobilize the fixation strap in its final position on the above-mentioned belt (VIII) after achieving the optimal strap length,

the two perpendicular girders (III) being composed of two parts, the tail-part (III.2), in the shape of a rounded cuboid on which the horizontal girder (IV) can be supported and adjusted, and the cranial-part (III.1), cylindrical in shape, with diameter from 5 to 8 mm, which forms an angle of 160-180 degrees to the tail-part (III.2),

the two perpendicular girders (III) forming an angle inwards from 0 to 20 degrees in their tail-part (III.2), depending on the shape of the user's face,

the distance between the two parallel legs of the horizontal girder (IV), U-shaped and of telescopic type, varying and being stabilized in a specific position by means of support (IV.4), according to the width of the user's face (transverse plane), said two parallel legs achieving such an inward or outward position (sagittal plane) in the slots (III.3) of the perpendicular girders (III), optimizing the tension of the elastic tractions in the user's maxilla without affecting in the slightest the position of the perpendicular girders (III).

2. An extraoral orthopaedic device (I) for the direct protraction of the maxilla and the indirect protraction of the mandible according to claim 1, wherein said perpendicular girders (III) and horizontal girder (IV) are, due to their design, removable and repositionable and can be reused in each user after sterilization.

3. An extraoral orthopaedic device (I) for the direct protraction of the maxilla and indirect protraction of the mandible, according to claim 1 or 2, wherein the center of the central part (IV.3) of the said horizontal girder (IV) is adapted to corresponds to the center of the user's face and its telescopic moving parts (IV.2) have markings aimed at easy, detailed and fully individualized adjustment in width to accommodate any face.

4. An extraoral orthopaedic device (I) for the direct protraction of the maxilla and the indirect protraction of the mandible, according to any of claims 1 to 3, wherein the mounting screws (IV.5) for the elastic bands (V) of the said horizontal girder (IV) are adapted to be positioned with their heads down or with their heads inverted by 180 degrees if the entire horizontal girder (IV) is inverted by 180 degrees.

5. An extraoral orthopaedic device (I) for the direct protraction of the maxilla and the indirect protraction of the mandible, according to any of claims 1 to 4, wherein the mounting screws (IV.5) for the elastic bands (V) of the said horizontal girder (IV), can be positioned with their heads down or with their heads inverted by 180 degrees, which can be achieved the extreme parts (IV:1) of the horizontal girder (IV) and the telescopic moving parts (IV.2) joined in the form of L are pulled out from the central part (IV.3) as a whole, first taking out the screws (IV.4) from the IV.2 parts, then, the joined parts IV. I and IV.2 can be repositioned at an angle of 180 degrees and the screws (IV.4) replaced and finally, the entire horizontal girder (IV) can be reversed by 180 degrees.

6. Method of design and manufacture of the said ellipsoidal skeletal support wreath (II) composing a main part of the extraoral orthopaedic device (I) according to claim 1, which wreath can be placed peripherally on the user's neurocranium (IX) and is fully adapted to the anatomy of it and which wreath comprises, firstly a tightening mechanism (11.1-4) in its frontal area, secondly the first means of adjustment and support (II.5-7) in its lateral areas to ensure the proper placement and safe support of the two perpendicular girders (III) and thirdly the first means of support (II.9) for the elastic fixation strap (VII) in its dorsal area which can couple the wreath with a belt (VIII) which can be passed around the user's waist or trunk,

said method is **characterized by** the determination of the parameters: A, B, C, Dleft, Dright, P, Os, Oi, DPfront, DPrear, DPrear1, Dos, Dos1, DOi, DOi1, whereby
A is the major semi-axis of the front ellipse
B is the major semi-axis of the rear ellipse
C is equal to P1P2/2, where P1P2 is the common minor axis of the two joined ellipses forming the maximum perimeter of the user's head

Dleft is the angle formed in the section D1KF of the head perimeter, where D1 corresponds to the left lateral canthi on a soft brass wire, K is the center of the two joined ellipses and F is the peak of the curvature in the anterior (frontal) region of the head

Dright is the angle formed in the section D2KF of the head perimeter, where D2 corresponds to the right lateral canthi on a soft brass wire, K is the center of the two joined ellipses and F is the peak of the curvature in the anterior (frontal) region of the head

P is the length of the parietal section

Os is the length of the occipital superior section

Oi is the length of the occipital inferior section

DPfront is the angle corresponding to the curvature of the frontal bone in the area of the midsagittal plane

DPrear angle corresponds to the curvature of the upper section of the dorsal surface in the areas of the parietal bones and the occipital bone in the midsagittal plane area

DPrear1 = DPrear/2

Dos angle corresponds to the curvature of the middle section of the dorsal surface in the areas of the parietal bones and the occipital bone in the midsagittal plane area Dos1 = DOs/2

Doi angle corresponds to the curvature of the lower section of the dorsal surface in the areas of the parietal bones and the occipital bone in the midsagittal plane area

DOi1 = DOi/2

said parameter determination being according to the following steps:

- the parameters A, B and C are initially calculated from the shape of the maximum perimeter of the user's skull, which are gained through the use of a soft brass wire which is adapted to the maximum cranial perimeter's shape
- the total length of the maximum cranial perimeter is calculated through the use of the parameters: A, B and C
- the values of the parameters, Dleft and Dright, correspond to the areas directly distally from the left and right lateral canthi of the user's eyes respectively
- the center of the tightening mechanism (II.1-4) of the said ellipsoidal skeletal support wreath (II) corresponds to the mid-distance between the middle of the user's eyebrows (Gb, Glabella) and the beginning of the scalp (Tr, Trichion)
- the measurements of the other parameters P, Os, Oi, DPfront, DPrear, DPrear1, Dos, Dos1, DOi, DOi1, with the help of a lateral cephalogram in the midsagittal plane, are used to create digitally (CAD) the inclinations and the widths of the ellipsoidal skeletal support wreath (II)
- the inclination of the ellipsoidal skeletal support wreath's anterior part corresponds to the inclination of the user's forehead which is calculated through the DPfront angle
- the ellipsoidal skeletal support wreath's posterior part inclinations are calculated through the angles DPrear, DOs and DOi and these inclinations correspond to the inclination of the tail portion of the parietal bones and of the occipital bone which are composed of the 3 segments P, Os and Oi, which correspond to the ellipsoidal skeletal support wreath's width in anterior and posterior regions
- the ellipsoidal skeletal support wreath's inclinations in the middle of the distance between the ellipsoidal skeletal support wreath's rearmost region in the midsagittal plane and the beginning of the creation of the cylindrical slots' area (II.5), corresponding to the angles, DPrear1, Dos1 and DOi1, which said values are the halves of the values of the angles: DPrear, Dos and DOi whereby computer-aided manufacturing (CAM) of the ellipsoidal skeletal support wreath (II) is done with the help of a 3D printer.

7. Method of design and manufacture of the said ellipsoidal skeletal support wreath (II) according to claim 6, wherein all parameters can be used, except the DPfront, as the inclination of the ellipsoidal skeletal support wreath (II) in the forehead area can be determined directly by the lateral cephalogram and the use of a computer.

8. Method of design and manufacture of the said ellipsoidal skeletal support wreath (II) according to claim 6, wherein only the first 6 parameters: A, B, C, Dleft, Dright and P are used and the inclinations and width of the ellipsoidal skeletal support wreath (II) in the anterior, posterior and also in the lateral areas can be calculated directly through the lateral and anteroposterior cephalograms and the use of a computer.

9. Method of design and manufacture of the said ellipsoidal skeletal support wreath (II) composing a main part of the extraoral orthopaedic device (I) according to claim 1, which wreath can be placed peripherally on the user's neurocranium (IX) and is fully adapted to the anatomy of it and which wreath comprises, firstly a tightening mechanism (II.1-4) in its frontal area, secondly the first means of adjustment and support (II.5-7) in its lateral areas to ensure the proper placement and safe support of the two perpendicular girders (III), and thirdly the first means of support (II.9) for the elastic fixation strap (VII) in its dorsal area which can couple the wreath with a belt (VIII) which can be passed around the user's waist or trunk,

the method **characterized by** the following steps:

- 3D computer-aided design (CAD) of the ellipsoidal skeletal support wreath (II) according to the exact anatomy of the user's neurocranium corresponding to its 3D digital imprint
- digital uniform enlargement of said 3D digital imprint perimeter throughout its depth because of an internal soft inlay (II.8), according to the thickness of this inlay
- digital placement of the tightening mechanism (II.1-4) in the center of its frontal area
- digital positioning of the first means of adjustment and support (II.5-7) in the wreath's lateral areas to ensure the proper placement and safe support of the two perpendicular girders (III) according to the Dleft and Dright parameters whereby

Dleft is the angle formed in the section D1KF of the head perimeter, where D1 corresponds to the left lateral canthi on a soft brass wire, K is the center of the two joined ellipses and F is the peak of the curvature in the anterior (frontal) region of the head
Dright is the angle formed in the section D2KF of the head perimeter, where D2 corresponds to the right lateral canthi on a soft brass wire, K is the center of the two joined ellipses and F is the peak of the curvature in the anterior (frontal) region of the head

- digital positioning of the first means of support (II.9) for the elastic fixation strap (VII) in its dorsal area
- computer-aided manufacturing (CAM) of the ellipsoidal skeletal support wreath (II) is done with the help of a 3D printer.

10. Method of design and manufacture of the said ellipsoidal skeletal support wreath (II) according to claim 9, **characterized by** the following steps:

- 3D computer-aided design (CAD) of the ellipsoidal skeletal support wreath (II) according to the principle of reverse engineering, where the wreath consisting of an impression material is scanned internally, which said scan corresponds to the exact three-dimensional anatomical shape of the user's neurocranium
- digital uniform enlargement of said 3D digital imprint perimeter throughout its depth because of the internal soft inlay (II.8), according to the thickness of this inlay
- digital positioning of the tightening mechanism (II.1-4) in the center of its frontal area
- digital positioning of the first means of adjustment and support (II.5-7) in the ellipsoidal skeletal support wreath's lateral areas to ensure the proper placement and safe support of the two perpendicular girders (III) according to the Dleft and Dright parameters
- digital positioning of the first means of support (II.9) for the elastic fixation strap (VII) in its dorsal area
- computer aided manufacturing (CAM) of the ellipsoidal skeletal support wreath (II) is done with the help of a 3D printer.

**Patentansprüche**

1. Extraorales orthopädisches Gerät (I) zur direkten Protraktion des Oberkiefers und zur indirekten Protraktion des Unterkiefers, umfassend: einen ellipsoiden skelettalen Stützkronenring (II), der an der Peripherie des Neurokraniums (IX) des Anwenders anbringbar ist, eine horizontale Stange (IV), die über elastische Bänder (V) mit einem intraoralen Mechanismus (VI) koppelbar ist, sowie senkrechte Stangen (III), welche den genannten ellipsoiden skelettalen Stützkronenring (II) mit der genannten horizontalen Stange (IV) verbinden können, und

- den genannten ellipsoiden skelettalen Stützkronenring (II), der an der Peripherie des Neurokraniums (IX) des Anwenders fixierbar ist und in seinem frontalen Bereich einen Spannmechanismus (II.1-4) sowie in seinem lateralen Bereich ein erstes Mittel zur Einstellung und Abstützung (II.5-7) umfasst, um die korrekte individualisierte Positionierung und sichere Immobilisierung der beiden genannten senkrechten Stangen (III) zu gewährleisten, und
- die genannten senkrechten Stangen (III), die ein zweites Mittel zur Einstellung und Abstützung (III.3-5) umfassen, um die individualisierte Positionierung der genannten horizontalen Stange (IV) sicherzustellen, mit dem Ziel, die Richtung und Spannung der elastischen Bänder (V) zu optimieren,

wobei das extraorale orthopädische Gerät (I) **dadurch gekennzeichnet ist, dass**:

der genannte ellipsoide skelettale Stützkronenring (II) so ausgebildet ist, dass er an der Peripherie des Neurokraniums (IX) des Anwenders anbringbar ist, ellipsoide Form aufweist und vollständig an die Anatomie des Neurokraniums angepasst ist,

der genannte ellipsoide skelettale Stützkronenring (II) so ausgebildet ist, dass er an der Peripherie des Neurokraniums (IX) des Anwenders anbringbar und während der gesamten Nutzungsdauer des Geräts durch seine vollständige anatomische Form, den Spannmechanismus (II.1-4) im frontalen Bereich sowie den elastischen Fixiergurt (VII) im dorsalen Bereich in Verbindung mit einem Gurt (VIII), welcher um die Taille oder den Rumpf des Anwenders gelegt werden kann, in Position fixierbar ist,

der Spannmechanismus (II.1-4) geführt-verstellbar ausgebildet ist und dazu dient, den ellipsoiden skelettalen Stützkronenring (II) teilweise mittels einer Schraube entsprechend dem Kopfumfang des Anwenders zu stabilisieren,

der ellipsoide skelettale Stützkronenring (II), der an der Peripherie des Neurokraniums (IX) des Anwenders anbringbar ist, im dorsalen Bereich ein erstes Stützelement (II.9) für den elastischen Fixiergurt umfasst, über welches dieser mit dem Gurt (VIII) gekoppelt wird, der um die Taille oder den Rumpf des Anwenders geführt werden kann,

der elastische Fixiergurt (VII) ein erstes Einstellmittel (VII.1) umfasst, das nach dem Einhängen in den Gurt (VIII) zur Erzielung der optimalen Länge verwendet werden kann,

der oben genannte Gurt (VIII), der um die Taille oder den Rumpf des Anwenders gelegt werden kann, ein erstes Stützelement (VIII.1) für den elastischen Fixiergurt (VII) des ellipsoiden skelettalen Stützkronenrings (II) umfasst, welcher peripher am Neurokranium (IX) des Anwenders anliegt, wobei dieses erste Stützelement (VIII.1) den Fixiergurt nach Erreichen der optimalen Gurtlänge in seiner Endposition am genannten Gurt (VIII) immobilisieren kann,

die beiden senkrechten Stangen (III) aus zwei Teilen bestehen, nämlich dem Schwanzteil (III.2) in Form eines abgerundeten Quaders, auf dem die horizontale Stange (IV) abgestützt und eingestellt werden kann, sowie dem kranialen Teil (III.1), der zylindrisch ausgebildet ist, einen Durchmesser von 5 bis 8 mm aufweist und einen Winkel von 160-180 Grad zum Schwanzteil (III.2) bildet,

die beiden senkrechten Stangen (III) in ihrem Schwanzteil (III.2) je nach Gesichtsform des Anwenders einen nach innen gerichteten Winkel von 0 bis 20 Grad bilden,

der Abstand zwischen den beiden parallelen Schenkeln der horizontalen Stange (IV), der U-förmig und teleskopisch ausgebildet ist, variierbar ist und mittels eines Stützelements (IV.4) in einer bestimmten Position stabilisiert wird, entsprechend der Breite des Gesichts des Anwenders (Transversalebene), wobei die beiden parallelen Schenkel in den Schlitzen (III.3) der senkrechten Stangen (III) eine nach innen oder außen gerichtete Position (Sagittalebene) einnehmen können, um die Spannung der elastischen Zugkräfte auf den Oberkiefer des Anwenders zu optimieren, ohne die Position der senkrechten Stangen (III) auch nur im Geringsten zu beeinflussen.

2. Extraorales orthopädisches Gerät (I) zur direkten Protraktion des Oberkiefers und zur indirekten Protraktion des Unterkiefers nach Anspruch 1,
**dadurch gekennzeichnet, dass** die genannten senkrechten Stangen (III) und die horizontale Stange (IV) aufgrund ihrer Konstruktion abnehmbar und repositionierbar sind und nach Sterilisation bei jedem Anwender wiederverwendet werden können.

3. Extraorales orthopädisches Gerät (I) zur direkten Protraktion des Oberkiefers und zur indirekten Protraktion des Unterkiefers nach Anspruch 1 oder 2,
**dadurch gekennzeichnet, dass** das Zentrum des zentralen Teils (IV.3) der genannten horizontalen Stange (IV) so ausgebildet ist, dass es dem Zentrum des Gesichts des Anwenders entspricht, und dass seine teleskopisch beweglichen Teile (IV.2) Markierungen aufweisen, die eine einfache, detaillierte und vollständig individualisierte Breitenanpassung zur Anpassung an jedes Gesicht ermöglichen.

4. Extraorales orthopädisches Gerät (I) zur direkten Protraktion des Oberkiefers und zur indirekten Protraktion des Unterkiefers nach einem der Ansprüche 1 bis 3,
**dadurch gekennzeichnet, dass** die Befestigungsschrauben (IV.5) für die elastischen Bänder (V) der genannten horizontalen Stange (IV) so ausgebildet sind, dass sie entweder mit ihren Köpfen nach unten oder um 180 Grad invertiert positioniert werden können, wenn die gesamte horizontale Stange (IV) um 180 Grad invertiert wird.

5. Extraorales orthopädisches Gerät (I) zur direkten Protraktion des Oberkiefers und zur indirekten Protraktion des

EP 4 493 109 B1

Unterkiefers nach einem der Ansprüche 1 bis 4, **dadurch gekennzeichnet, dass** die Befestigungsschrauben (IV.5) für die elastischen Bänder (V) der genannten horizontalen Stange (IV) entweder mit ihren Köpfen nach unten oder um 180 Grad invertiert positioniert werden können, wobei dies dadurch erreicht werden kann, dass die Endteile (IV.1) der horizontalen Stange (IV) und die teleskopisch beweglichen Teile (IV.2), die gemeinsam eine L-Form bilden, als Einheit aus ihrem zentralen Teil (IV.3) herausgezogen werden, wobei zunächst die Schrauben (IV.4) aus den Teilen IV.2 entfernt werden, anschließend die verbundenen Teile IV.1 und IV.2 um 180 Grad repositioniert und die Schrauben (IV.4) wieder eingesetzt werden, und schließlich die gesamte horizontale Stange (IV) um 180 Grad umgedreht wird.

6. Verfahren zur Gestaltung und Herstellung des genannten ellipsoiden skelettalen Stützkronenrings (II), der einen Hauptbestandteil des extraoralen orthopädischen Geräts (I) gemäß Anspruch 1 bildet, wobei der Stützkronenring peripher auf dem Neurokranium (IX) des Anwenders anbringbar ist, vollständig an dessen Anatomie angepasst ist und erstens einen Spannmechanismus (II.1-4) in seinem frontalen Bereich, zweitens die ersten Mittel zur Einstellung und Abstützung (II.5-7) in seinen lateralen Bereichen zur Gewährleistung der korrekten Positionierung und sicheren Abstützung der beiden senkrechten Stangen (III) sowie drittens das erste Stützelement (II.9) für den elastischen Fixiergurt (VII) in seinem dorsalen Bereich umfasst, über welches der Stützkronenring mit einem Gurt (VIII) koppelbar ist, der um die Taille oder den Rumpf des Anwenders geführt werden kann,
wobei das Verfahren durch die Bestimmung der Parameter A, B, C, Dleft, Dright, P, Os, Oi, DPfront, DPrear, DPrear1, Dos, Dos1, DOi und DOil gekennzeichnet ist, wobei gilt:

A ist die große Halbachse der vorderen Ellipse,
B ist die große Halbachse der hinteren Ellipse,
C entspricht P1P2/2, wobei P1P2 die gemeinsame kleine Achse der beiden verbundenen Ellipsen ist, die den maximalen Kopfumfang des Anwenders bilden,
Dleft ist der Winkel im Abschnitt DIKF des Kopfumfangs, wobei D1 dem linken lateralen Kanthus auf einem weichen Messingdraht entspricht, K das Zentrum der beiden verbundenen Ellipsen ist und F den Scheitelpunkt der Krümmung im anterioren (frontalen) Bereich des Kopfes darstellt,
Dright ist der Winkel im Abschnitt D2KF des Kopfumfangs, wobei D2 dem rechten lateralen Kanthus entspricht,
P ist die Länge des parietalen Abschnitts,
Os ist die Länge des oberen okzipitalen Abschnitts,
Oi ist die Länge des unteren okzipitalen Abschnitts,
DPfront ist der Winkel, der der Krümmung des Stirnbeins im Bereich der Medianebene entspricht,
DPrear ist der Winkel, der der Krümmung des oberen Abschnitts der dorsalen Schädeloberfläche im Bereich der Scheitelbeine und des Hinterhauptbeins in der Medianebene entspricht,

$$DPrear1 = DPrear/2,$$

Dos ist der Winkel, der der Krümmung des mittleren Abschnitts der dorsalen Schädeloberfläche im Bereich der Scheitelbeine und des Hinterhauptbeins in der Medianebene entspricht,

$$Dos1 = Dos/2,$$

DOi ist der Winkel, der der Krümmung des unteren Abschnitts der dorsalen Schädeloberfläche im Bereich der Scheitelbeine und des Hinterhauptbeins in der Medianebene entspricht,

$$DOi1 = DOi/2,$$

wobei die Parameterbestimmung gemäß den folgenden Schritten erfolgt:

- Die Parameter A, B und C werden zunächst aus der Form des maximalen Kopfumfangs des Anwenders berechnet, welche mittels eines weichen Messingdrahts ermittelt wird, der an die Form des maximalen kranialen Umfangs angepasst wird.
- Die Gesamtlänge des maximalen kranialen Umfangs wird unter Verwendung der Parameter A, B und C berechnet.
- Die Werte der Parameter Dleft und Dright entsprechen den Bereichen unmittelbar distal der linken bzw. rechten lateralen Kanthi der Augen des Anwenders.
- Das Zentrum des Spannmechanismus (II.1-4) des genannten ellipsoiden skelettalen Stützkronenrings (II) entspricht der Mittelposition zwischen der Mitte der Augenbrauen des Anwenders (Gb, Glabella) und dem Beginn des Haaransatzes (Tr, Trichion).
- Die Messwerte der weiteren Parameter P, Os, Oi, DPfront, DPrear, DPrear1, Dos, Dos1, DOi und DOiI, die mithilfe eines Fernröntgenseitenbildes in der Medianebene gewonnen werden, dienen der digitalen (CAD) Erstellung der Neigungen und Breiten des ellipsoiden skelettalen Stützkronenrings (II).
- Die Neigung des vorderen Bereichs des ellipsoiden skelettalen Stützkronenrings entspricht der Neigung der Stirn des Anwenders, welche durch den Winkel DPfront berechnet wird.
- Die Neigungen des hinteren Bereichs des ellipsoiden skelettalen Stützkronenrings werden durch die Winkel DPrear, Dos und DOi berechnet und entsprechen der Neigung des hinteren Abschnitts der Scheitelbeine und des Hinterhauptbeins, die aus den drei Segmenten P, Os und Oi bestehen und die Breite des Stützkronenrings in den anterioren und posterioren Bereichen bestimmen.
- Die Neigungen des ellipsoiden skelettalen Stützkronenrings in der Mitte der Strecke zwischen seinem hintersten Bereich in der Medianebene und dem Beginn des Bereichs der zylindrischen Schlitze (11.5) entsprechen den Winkeln DPrear1, Dos1 und DOiI, welche jeweils die Hälfte der Werte der Winkel DPrear, Dos und DOi darstellen.

wobei die computergestützte Fertigung (CAM) des ellipsoiden skelettalen Stützkronenrings (II) mithilfe eines 3D-Druckers erfolgt.

7. Verfahren zur Gestaltung und Herstellung des genannten ellipsoiden skelettalen Stützkronenrings (II) nach Anspruch 6,
**dadurch gekennzeichnet, dass** alle Parameter verwendet werden können, mit Ausnahme des Parameters DPfront, da die Neigung des ellipsoiden skelettalen Stützkronenrings (II) im Stirnbereich direkt durch das Fernröntgenseitenbild und unter Verwendung eines Computers bestimmt werden kann.

8. Verfahren zur Gestaltung und Herstellung des genannten ellipsoiden skelettalen Stützkronenrings (II) nach Anspruch 6,
**dadurch gekennzeichnet, dass** lediglich die ersten sechs Parameter A, B, C, Dleft, Dright und P verwendet werden und dass die Neigungen und die Breite des ellipsoiden skelettalen Stützkronenrings (II) im anterioren, posterioren und auch im lateralen Bereich direkt anhand der lateralen und anteroposterioren Fernröntgenbilder und unter Verwendung eines Computers berechnet werden können.

9. Verfahren zur Gestaltung und Herstellung des genannten ellipsoiden skelettalen Stützkronenrings (II), der einen Hauptbestandteil des extraoralen orthopädischen Geräts (I) gemäß Anspruch 1 bildet, wobei der Stützkronenring peripher auf dem Neurokranium (IX) des Anwenders anbringbar ist, vollständig an dessen Anatomie angepasst ist und erstens einen Spannmechanismus (II.1-4) in seinem frontalen Bereich, zweitens die ersten Mittel zur Einstellung und Abstützung (II.5-7) in seinen lateralen Bereichen zur Gewährleistung der korrekten Positionierung und sicheren Abstützung der beiden senkrechten Stangen (III) sowie drittens das erste Stützelement (11.9) für den elastischen Fixiergurt (VII) in seinem dorsalen Bereich umfasst, über welches der Stützkronenring mit einem Gurt (VIII) koppelbar ist, der um die Taille oder den Rumpf des Anwenders geführt werden kann,

wobei das Verfahren durch folgende Schritte gekennzeichnet ist:

- 3D-computergestützte Konstruktion (CAD) des ellipsoiden skelettalen Stützkronenrings (II) entsprechend der exakten Anatomie des Neurokraniums des Anwenders anhand dessen dreidimensionalen digitalen Abdrucks,
- digitale gleichmäßige Vergrößerung des genannten 3D-digitalen Abdrucks über seine gesamte Tiefe aufgrund eines inneren weichen Inlays (II.8), entsprechend der Dicke dieses Inlays,
- digitale Platzierung des Spannmechanismus (II.1-4) im Zentrum des frontalen Bereichs,
- digitale Positionierung der ersten Mittel zur Einstellung und Abstützung (II.5-7) in den lateralen Bereichen des Stützkronenrings zur Gewährleistung der korrekten Positionierung und sicheren Abstützung der beiden senkrechten Stangen (III) gemäß den Parametern Dleft und Dright,

wobei gilt:

Dleft ist der Winkel im Abschnitt DIKF des Kopfumfangs, wobei D1 dem linken lateralen Kanthus auf einem weichen Messingdraht entspricht, K das Zentrum der beiden verbundenen Ellipsen ist und F den Scheitelpunkt der Krümmung im anterioren (frontalen) Bereich des Kopfes darstellt;
Dright ist der Winkel im Abschnitt D2KF des Kopfumfangs, wobei D2 dem rechten lateralen Kanthus entspricht,

- digitale Positionierung des ersten Stützelements (II.9) für den elastischen Fixiergurt (VII) im dorsalen Bereich,
- computergestützte Fertigung (CAM) des ellipsoiden skelettalen Stützkronenrings (II) mithilfe eines 3D-Druckers.

10. Verfahren zur Gestaltung und Herstellung des genannten ellipsoiden skelettalen Stützkronenrings (II) nach Anspruch 9,
**dadurch gekennzeichnet** durch folgende Schritte:

- 3D-computergestützte Konstruktion (CAD) des ellipsoiden skelettalen Stützkronenrings (II) nach dem Prinzip des Reverse Engineering, wobei der aus einem Abformmaterial bestehende Stützkronenring innen gescannt wird, wobei dieser Scan der exakten dreidimensionalen anatomischen Form des Neurokraniums des Anwenders entspricht,
- digitale gleichmäßige Vergrößerung des genannten 3D-digitalen Abdrucks über seine gesamte Tiefe aufgrund des inneren weichen Inlays (11.8), entsprechend der Dicke dieses Inlays,
- digitale Positionierung des Spannmechanismus (II.1-4) im Zentrum des frontalen Bereichs,
- digitale Positionierung der ersten Mittel zur Einstellung und Abstützung (II.5-7) in den lateralen Bereichen des ellipsoiden skelettalen Stützkronenrings zur Gewährleistung der korrekten Positionierung und sicheren Abstützung der beiden senkrechten Stangen (III) gemäß den Parametern Dleft und Dright,
- digitale Positionierung des ersten Stützelements (II.9) für den elastischen Fixiergurt (VII) im dorsalen Bereich,
- computergestützte Fertigung (CAM) des ellipsoiden skelettalen Stützkronenrings (II) mithilfe eines 3D-Druckers.

**Revendications**

1. Dispositif orthopédique extra-oral (I) pour la propulsion directe du maxillaire et la propulsion indirecte de la mandibule, comprenant: une couronne de soutien squelettique ellipsoïdale (II) pouvant être placée sur la périphérie du neurocrâne (IX) de l'utilisateur, une traverse horizontale (IV), pouvant être couplée par des élastiques (V) à un mécanisme intra-oral (VI) et des montants perpendiculaires (III), pouvant coupler ladite couronne de soutien squelettique ellipsoïdale (II) avec ladite traverse horizontale (IV) et

- ladite couronne de soutien squelettique ellipsoïdale (II) pouvant être fixée à la périphérie du neurocrâne (IX) de l'utilisateur, comprenant un mécanisme de serrage (II.1-4) dans sa zone frontale, et un premier moyen de réglage et de soutien (II.5-7) dans sa zone latérale pour assurer le placement individualisé approprié et l'immobilisation sécurisée desdits deux montants perpendiculaires (III) et
- lesdits montants perpendiculaires (III) comprenant un deuxième moyen de réglage et de soutien (III.3-5) pour assurer le placement individualisé de ladite traverse horizontale (IV), visant à optimiser la direction et la tension des élastiques (V),

le dispositif orthopédique extra-oral (I) étant **caractérisé par** :

ladite couronne de soutien squelettique ellipsoïdale (II) étant adaptée pour être placée sur la périphérie du neurocrâne (IX) de l'utilisateur, étant de forme ellipsoïdale et étant entièrement adaptée à l'anatomie du neurocrâne,
ladite couronne de soutien squelettique ellipsoïdale (II) étant adaptée pour être placée sur la périphérie du neurocrâne (IX) de l'utilisateur étant adaptée pour être fixée en position, tout au long de l'utilisation du dispositif, par sa forme anatomique complète, le
mécanisme de serrage (II.1-4) dans sa zone frontale et la sangle de fixation élastique (VII) dans sa zone dorsale conjointement avec une ceinture (VIII), ladite ceinture étant adaptée pour être ajustée autour de la taille ou du tronc de l'utilisateur,
le mécanisme de serrage (II.1-4) étant de type guidé-réglable et étant adapté pour stabiliser la couronne de soutien squelettique ellipsoïdale (II) partiellement à l'aide d'une vis, selon le périmètre de la tête de l'utilisateur, la couronne de soutien squelettique ellipsoïdale (II) pouvant être placée sur la périphérie du neurocrâne (IX) de l'utilisateur, comprenant le premier moyen de soutien (II.9) pour la sangle de fixation élastique dans sa zone dorsale, par laquelle elle est couplée avec la ceinture (VIII), qui peut être passée autour de la taille ou du tronc de l'utilisateur,

la sangle de fixation élastique (VII) comprenant le premier moyen de réglage (VII.1) pouvant être utilisé après avoir été accrochée à la ceinture (VIII) pour obtenir une longueur optimale,

la ceinture susmentionnée (VIII), pouvant être ajustée autour de la taille ou du tronc de l'utilisateur comprenant le premier moyen de soutien (VIII.1) pour la sangle de fixation élastique (VII) de la couronne de soutien squelettique ellipsoïdale (II) périphériquement au neurocrâne (IX) de l'utilisateur, lequel premier moyen de soutien (VIII.1) peut immobiliser la sangle de fixation dans sa position finale sur ladite ceinture (VIII) après avoir atteint la longueur optimale de la sangle,

les deux montants perpendiculaires (III) étant composés de deux parties, la partie caudale (III.2), en forme de cuboïde arrondi sur lequel la traverse horizontale (IV) peut être soutenue et réglée, et la partie crânienne (III.1), de forme cylindrique, avec un diamètre de 5 à 8 mm, qui forme un angle de 160-180 degrés avec la partie caudale (III.2)

les deux montants perpendiculaires (III) formant un angle vers l'intérieur de 0 à 20 degrés dans leur partie caudale (III.2), selon la forme du visage de l'utilisateur,

la distance entre les deux branches parallèles de la traverse horizontale (IV), en forme de U et de type télescopique, variant et étant stabilisée dans une position spécifique par le moyen de soutien (IV.4), selon la largeur du visage de l'utilisateur (plan transversal), lesdites deux branches parallèles atteignant une telle position vers l'intérieur ou vers l'extérieur (plan sagittal) dans les fentes (III.3) des montants perpendiculaires (III), optimisant la tension des tractions élastiques sur le maxillaire de l'utilisateur sans affecter en aucune façon la position des montants perpendiculaires (III).

2.  Dispositif orthopédique extra-oral (I) pour la propulsion directe du maxillaire et la propulsion indirecte de la mandibule selon la revendication 1, dans lequel lesdits montants perpendiculaires (III) et traverse horizontale (IV) sont, de par leur conception, amovibles et repositionnables et peuvent être réutilisés chez chaque utilisateur après stérilisation.

3.  Dispositif orthopédique extra-oral (I) pour la propulsion directe du maxillaire et la propulsion indirecte de la mandibule, selon la revendication 1 ou 2, dans lequel le centre de la partie centrale (IV.3) de ladite traverse horizontale (IV) est adapté pour correspondre au centre du visage de l'utilisateur et ses parties mobiles télescopiques (IV.2) comportent des repères visant un réglage facile, détaillé et entièrement individualisé en largeur pour s'adapter à tout visage.

4.  Dispositif orthopédique extra-oral (I) pour la propulsion directe du maxillaire et la propulsion indirecte de la mandibule, selon l'une quelconque des revendications 1 à 3, dans lequel les vis de montage (IV.5) pour les élastiques (V) de ladite traverse horizontale (IV) sont adaptées pour être positionnées avec leurs têtes vers le bas ou avec leurs têtes inversées de 180 degrés si la traverse horizontale (IV) entière est inversée de 180 degrés.

5.  Dispositif orthopédique extra-oral (I) pour la propulsion directe du maxillaire et la propulsion indirecte de la mandibule, selon l'une quelconque des revendications 1 à 4, dans lequel les vis de montage (IV.5) pour les élastiques (V) de ladite traverse horizontale (IV), peuvent être positionnées avec leurs têtes vers le bas ou avec leurs têtes inversées de 180 degrés, ce qui peut être obtenu si les parties extrêmes (IV.1) de la traverse horizontale (IV) et les parties mobiles télescopiques (IV.2) jointes en forme de L sont retirées de la partie centrale (IV.3) comme un ensemble, en retirant d'abord les vis (IV.4) des parties IV.2, puis, les parties jointes IV.1 et IV.2 peuvent être repositionnées à un angle de 180 degrés et les vis (IV.4) remplacées et finalement, la traverse horizontale (IV) entière peut être inversée de 180 degrés.

6.  Méthode de conception et de fabrication de ladite couronne de soutien squelettique ellipsoïdale (II) composant une partie principale du dispositif orthopédique extra-oral (I) selon la revendication 1, laquelle couronne peut être placée périphériquement sur le neurocrâne (IX) de l'utilisateur et est entièrement adaptée à son anatomie et laquelle couronne comprend premièrement un mécanisme de serrage (II.1-4) dans sa zone frontale, deuxièmement le premier moyen de réglage et de soutien (II.5-7) dans ses zones latérales pour assurer le placement approprié et le soutien sécurisé des deux montants perpendiculaires (III) et troisièmement le premier moyen de soutien (II.9) pour la sangle de fixation élastique (VII) dans sa zone dorsale qui peut coupler la couronne avec une ceinture (VIII) qui peut être passée autour de la taille ou du tronc de l'utilisateur,

ladite méthode est **caractérisée par** la détermination des paramètres : A, B, C, Dgauche, Ddroite, P, Os, Oi, DPavant, DParrière, DParrière1, Dos, Dos1, DOi, DOil, où

A est le demi-grand axe de l'ellipse antérieure

B est le demi-grand axe de l'ellipse postérieure

C est égal à P1P2/2, où P1P2 est le petit axe commun des deux ellipses jointes formant le périmètre maximum de la tête de l'utilisateur

Dgauche est l'angle formé dans la section D1KF du périmètre de la tête, où D1 correspond aux canthus latéraux gauches sur un fil de laiton souple, K est le centre des deux ellipses jointes et F est le sommet de la courbure dans la région antérieure (frontale) de la tête

Ddroite est l'angle formé dans la section D2KF du périmètre de la tête, où D2 correspond aux canthus latéraux droits sur un fil de laiton souple, K est le centre des deux ellipses jointes et F est le sommet de la courbure dans la région antérieure (frontale) de la tête

P est la longueur de la section pariétale

Os est la longueur de la section occipitale supérieure

Oi est la longueur de la section occipitale inférieure

DPavant est l'angle correspondant à la courbure de l'os frontal dans la zone du plan médio-sagittal

DParrière angle correspond à la courbure de la section supérieure de la surface dorsale dans les zones des os pariétaux et de l'os occipital dans la zone du plan médio-sagittal

$$DParrière1 = DParrière/2$$

Dos angle correspond à la courbure de la section médiane de la surface dorsale dans les zones des os pariétaux et de l'os occipital dans la zone du plan médio-sagittal Dos1=Dos/2

DOi angle correspond à la courbure de la section inférieure de la surface dorsale dans les zones des os pariétaux et de l'os occipital dans la zone du plan médio-sagittal DOi1=DOi/2

ladite détermination des paramètres étant selon les étapes suivantes :

- les paramètres A, B et C sont initialement calculés à partir de la forme du périmètre maximum du crâne de l'utilisateur, qui sont obtenus par l'utilisation d'un fil de laiton souple qui est adapté à la forme du périmètre crânien maximum
- la longueur totale du périmètre crânien maximum est calculée par l'utilisation des paramètres : A, B et C
- les valeurs des paramètres Dgauche et Ddroite correspondent aux zones directement distales par rapport aux canthus latéraux gauche et droit des yeux de l'utilisateur respectivement
- le centre du mécanisme de serrage (II.1-4) de ladite couronne de soutien squelettique ellipsoïdale (II) correspond à la mi-distance entre le milieu des sourcils de l'utilisateur (Gb, Glabelle) et le début du cuir chevelu (Tr, Trichion)
- Les mesures des autres paramètres P, Os, Oi, DPavant, DParrière, DParrière1, Dos, Dos1, DOi, DOi1, à l'aide d'une téléradiographie de profil dans le plan médio-sagittal, sont utilisées pour créer numériquement (CAO) les inclinaisons et les largeurs de la couronne de soutien squelettique ellipsoïdale (II)
- L'inclinaison de la partie antérieure de la couronne de soutien squelettique ellipsoïdale correspond à l'inclinaison du front de l'utilisateur qui est calculée par l'angle DPavant
- Les inclinaisons de la partie postérieure de la couronne de soutien squelettique ellipsoïdale sont calculées par les angles DParrière, DOs et DOi et ces inclinaisons correspondent à l'inclinaison de la portion caudale des os pariétaux et de l'os occipital qui sont composés des 3 segments P, Os et Oi, qui correspondent à la largeur de la couronne de soutien squelettique ellipsoïdale dans les régions antérieure et postérieure
- les inclinaisons de la couronne de soutien squelettique ellipsoïdale au milieu de la distance entre la région la plus postérieure de la couronne de soutien squelettique ellipsoïdale dans le plan médio-sagittal et le début de la création de la zone des fentes cylindriques (II.5), correspondant aux angles, DParrière1, Dos1 et DOi1, lesquelles dites valeurs sont les moitiés des valeurs des angles : DParrière, Dos et DOi.

où

la fabrication assistée par ordinateur (FAO) de la couronne de soutien squelettique ellipsoïdale (II) est réalisée à l'aide d'une imprimante 3D.

7.  Méthode de conception et de fabrication de ladite couronne de soutien squelettique ellipsoïdale (II) selon la revendication 6, dans laquelle tous les paramètres peuvent être utilisés, sauf le DPavant, car l'inclinaison de la couronne de soutien squelettique ellipsoïdale (II) dans la zone du front peut être déterminée directement par la téléradiographie de profil et l'utilisation d'un ordinateur.

8.  Méthode de conception et de fabrication de ladite couronne de soutien squelettique ellipsoïdale (II) selon la revendication 6, dans laquelle seuls les 6 premiers paramètres : A, B, C, Dgauche, Ddroite et P sont utilisés et les inclinaisons et la largeur de la couronne de soutien squelettique ellipsoïdale (II) dans les zones antérieure, postérieure et également latérales peuvent être calculées directement par les téléradiographies de profil et antéro-postérieures et l'utilisation d'un ordinateur.

9. Méthode de conception et de fabrication de ladite couronne de soutien squelettique ellipsoïdale (II) composant une partie principale du dispositif orthopédique extra-oral (I) selon la revendication 1, laquelle couronne peut être placée périphériquement sur le neurocrâne (IX) de l'utilisateur et est entièrement adaptée à son anatomie et laquelle couronne

comprend, premièrement un mécanisme de serrage (II.1-4) dans sa zone frontale, deuxièmement le premier moyen de réglage et de soutien (II.5-7) dans ses zones latérales pour assurer le placement approprié et le soutien sécurisé des deux montants perpendiculaires (III), et troisièmement le premier moyen de soutien (II.9) pour la sangle de fixation élastique (VII) dans sa zone dorsale qui peut coupler la couronne avec une ceinture (VIII) qui peut être passée autour de la taille ou du tronc de l'utilisateur,
la méthode **caractérisée par** les étapes suivantes :

- conception 3D assistée par ordinateur (CAO) de la couronne de soutien squelettique ellipsoïdale (II) selon l'anatomie exacte du neurocrâne de l'utilisateur correspondant à son empreinte numérique 3D
- agrandissement numérique uniforme dudit périmètre de l'empreinte numérique 3D sur toute sa profondeur en raison d'un revêtement intérieur souple (II.8), selon l'épaisseur de ce revêtement,
- placement numérique du mécanisme de serrage (11.1-4) au centre de sa zone frontale,
- positionnement numérique du premier moyen de réglage et de soutien (II.5-7) dans les zones latérales de la couronne pour assurer le placement approprié et le soutien sécurisé des deux montants perpendiculaires (III) selon les paramètres Dgauche et Ddroite

où
Dgauche est l'angle formé dans la section D1KF du périmètre de la tête, où D1 correspond aux canthus latéraux gauches sur un fil de laiton souple, K est le centre des deux ellipses jointes et F est le sommet de la courbure dans la région antérieure (frontale) de la tête
Ddroite est l'angle formé dans la section D2KF du périmètre de la tête, où D2 correspond aux canthus latéraux droits sur un fil de laiton souple, K est le centre des deux ellipses jointes et F est le sommet de la courbure dans la région antérieure (frontale) de la tête

- positionnement numérique du premier moyen de soutien (11.9) pour la sangle de fixation élastique (VII) dans sa zone dorsale,
- la fabrication assistée par ordinateur (FAO) de la couronne de soutien squelettique ellipsoïdale (II) est réalisée à l'aide d'une imprimante 3D.

10. Méthode de conception et de fabrication de ladite couronne de soutien squelettique ellipsoïdale (II) selon la revendication 9, **caractérisée par** les étapes suivantes :

- conception 3D assistée par ordinateur (CAO) de la couronne de soutien squelettique ellipsoïdale (II) selon le principe de la rétro-ingénierie, où la couronne constituée d'un matériau à empreinte est scannée intérieurement, ledit scan correspond à la forme anatomique tridimensionnelle exacte du neurocrâne de l'utilisateur
- agrandissement numérique uniforme dudit périmètre de l'empreinte numérique 3D sur toute sa profondeur en raison du revêtement intérieur souple (II.8), selon l'épaisseur de ce revêtement
- positionnement numérique du mécanisme de serrage (II.1-4) au centre de sa zone frontale
- positionnement numérique du premier moyen de réglage et de soutien (II.5-7) dans les zones latérales de la couronne de soutien squelettique ellipsoïdale pour assurer le placement approprié et le soutien sécurisé des deux montants perpendiculaires (III) selon les paramètres Dgauche et Ddroite
- positionnement numérique du premier moyen de soutien (II.9) pour la sangle de fixation élastique (VII) dans sa zone dorsale
- la fabrication assistée par ordinateur (FAO) de la couronne de soutien squelettique ellipsoïdale (II) est réalisée à l'aide d'une imprimante 3D.

fig.1

fig.2

fig.3

III.6

III.1

III

III.2

III.3

III.6

III

III.1

III.2

III.3

III.4

III.5

fig.4

III.6

III

III.1

III.2

160°-180°

III.3

III.6

III

III.1

III.2

III.4

III.3

III.5

fig.5

fig.6

fig.7

fig.8

fig.9

fig.10

fig.11

fig.12

fig.13

fig.14

fig.15

fig.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5158451 A
- US 20120040301 A1
- WO 2017089971 A
- US 2018028282 A
- US 6213765 B1
- WO 2020254642 A1
- EP 2020067216 W
- WO 2021090035 A1
- US 0040301 A, Ngiam loachim
- WO 2017089971 A1, DEL GOBBO WANDA
- US 2018028282 A1, KAHN SANDRA VIVIAN, FLORES CERCEDA MABEL, KAHN LEVENTHAL ILAN
- US 10166089 B2
- US 20190101 B2
- US OO5890891 A, Walter A. Doyle

### Non-patent literature cited in the description

- **HAAS AJ**. Rapid expansion of the maxillary dental arch and nasal cavity by opening the midpalatal suture. *Angle Orthod*, 1961, vol. 31 (2), 73-90
- **BIEDERMAN W**. A hygienic appliance for rapid expansion. *J Pract Orthod.*, 1968, vol. 2 (2), 67-70
- **HAAS AJ**. Palatal expansion: Just the beginning of dentofacial orthopedics. *Am J Orthod.*, 1970, vol. 57 (3), 219-55
- **MCNAMARA JA**. An Orthopedic Approach to the Treatment of Class III Malocclusion in Young Patients. *J Clin Orthod.*, 1987, vol. 21 (9), 598-608
- **LIOU EJ** ; **TSAI WC**. A new protocol for maxillary protraction in cleft patients: repetitive weekly protocol of alternate rapid maxillary expansions and constrictions. *Cleft Palate-Craniofacial Journal*, 2005, vol. 42, 121-27
- **CANTURK BH** ; **CELIKOGLU M**. Comparison of the effects of face mask treatment started simultaneously and after the completion of the alternate rapid maxillary expansion and constriction procedure. *Angle Orthod*, 2015, vol. 85 (2), 284-91
- **LIU W** ; **ZHOU Y** ; **WANG X** ; **LIU D** ; **ZHOU S**. Effect of maxillary protraction with alternating rapid palatal expansion and constriction vs expansion alone in maxillary retrusive patients: A single-center randomized controlled trial. *Am J Orthod Dentofacial Orthop*, 2015, vol. 148 (4), 641-51
- **WILMES B** ; **NIENKEMPER M** ; **LUDWIG B** ; **KAU CH** ; **DRESCHER D**. Early Class III Treatment with a Hybrid-Mentoplate Combination. *J Clin. Orthod.*, 2011, vol. 45 (1), 1-7
- **DELAIRE J**. Confection du masque orthopedique. *Rev Stomatol.*, 1971, vol. 72 (5), 579-84
- **DELAIRE VJ** ; **VERDON P** ; **FLOOR J**. Ziele und Ergebnisse extraoraler Züge in postero-anteriorer Richtung in Anwendung einer orthopädischen Maske bei der Behandlung von Fallen der Klasse III. *Fortschr Kiefer Orthop*, 1976, vol. 37, 246-262
- Adaptations following accelerated facial mask therapy in clinical alteration of the growth face. **PETIT H**. Clinical Alteration of the Growing Face, monograph 14, Craniofacial Growth Series. University of Michigan, 1983
- **TURLEY PK**. Orthopedic correction of Class III malocclusion with palatal expansion and custom protraction headgear. *J Clin Orthod*, 1988, vol. 22 (5), 314-325
- **HEGMANN M** ; **RÜTHER AK**. The Grummons face mask as an early treatment modality within a class III therapy concept. *J Orofacial Orthop*, 2003, vol. 64 (6), 450-6
- **ALCAN T** ; **KELES A** ; **ERVERDI N**. The effects of a modified protraction headgear on maxilla. *Am J Orthod Dentofacial Orthop*, 2000, vol. 117, 27-38
- **DE CLERCK HJ** ; **CORNELIS MA** ; **CEVIDANES LH** ; **HEYMANN GC** ; **TULLOCH CJ**. Orthopedic traction of the maxilla with miniplates: a new perspective for treatment of midface deficiency. *J Oral Maxillofacial Surg*, 2009, vol. 67 (10), 2123-9
- **YATABE M** ; **GARIB D** ; **FACO R** ; **DE CLERCK H** ; **SOUKI B** ; **JANSON G** ; **NGUYEN T** ; **CEVIDANES L** ; **RUELLAS A**. Mandibular and glenoid fossa changes after bone-anchored maxillary protraction therapy in patients with UCLP: A 3-D preliminary assessment. *Angle Orthod*, May 2017, vol. 87 (3), 423-431

- **CHA BK** ; **CHOI DS** ; **NGAN P** ; **JOST-BRINKMANN PG** ; **KIM SM** ; **JANG IS**. Maxillary protraction with miniplates providing skeletal anchorage in a growing Class III patient. *Am J Orthod Dentofacial Orthop*, 2011, vol. 139, 99-112
- **LORENTE C** ; **ALFARO FH** ; **VELA MP** ; **LORENTE P** ; **LORENTE T**. Surgical-Orthodontic approach for facial rejuvenation based on a reverse facelift. *Progress in Orthodontics*, 2019, vol. 20, 34, https://doi.org/10.1186/s40510-019-0287-8
- Die Röntgenostatik. **SCHWARZ A. M.** Urban & Schwarzenberg. 1958
- **YATABE M.** ; **GARIB D.G.** ; **ANDRÉ DE SOUZA FACO R** ; **DE CLERCK H.** ; **JANSON G** ; **NGUYEN T.** ; **LUCIA HELENA SOARES CEVIDANES L.H.S.** ; **RUELLAS A.C**. Bone-anchored maxillary protraction therapy in patients with unilateral complete cleft lip and palate: 3-dimensional assessment of maxillary effects. *Am J Orthod Dentofacial Orthop*, September 2017, vol. 152 (3), 327-335
- **WELLENS HLL** ; **HOSKENS H** ; **CLAES P** ; **KUIJPERS-JAGTMAN AM** ; **ORTEGA-CASTRILLON A**. Three-dimensional facial capture using a custom-built photogrammetry setup: design, performance and cost. *Am J Orthod Dentofacial Orthop*, 2020, vol. 158, 286-99
- **HANS MG** ; **PALOMO JM** ; **VALIATHAN M**. History of imaging in orthodontics from Broadbent to cone-beam computed tomography. *Am J Orthod Dentofacial Orthop*, 2015, vol. 148, 914-21
- **VELASCO REGINA CASIAN RUIZ** ; **LIANG HUI**. Cone-Beam Computed Tomography (CBCT). *Applications in Dentistry*
- **YEH, JK.** ; **CHEN, CH**. Estimated radiation risk of cancer from dental cone-beam computed tomography imaging in orthodontics patients. *BMC Oral Health*, 2018, vol. 18, 131
- *Dental Cone-beam Computed Tomography*, https://www.fda.gov/radiation-emitting-products/medical-x-ray-imaging/dental-cone-beam-computed-tomography#benefitsrisks
- *Safety and Efficacy of a New and Emerging Dental X-ray Modality*, https://cordis.europa.eu/project/id/212246
- *Pediatric X-ray Imaging*, https://www.fda.gov/radiation-emitting-products/medical-imaging/pediatric-x-ray-imaging
- **TATLI U** ; **EVLICE B**. *Cone-Beam Computed Tomography for Oral and Maxillofacial Imaging*
- **SIGNORELLI L.** ; **PATCAS R.** ; **PELTOMÄKI T.** ; **SCHÄTZLE M**. Radiation dose of cone-beam computed tomography compared to conventional radiographs in orthodontics. *Journal of Orofacial Orthopedics / Fortschritte der Kieferorthopädie*, January 2016, vol. 77 (1), 9-15